# EUROPÄISCHE PATENTSCHRIFT

(11) **EP 3 482 247 B1**
(45) Veröffentlichungstag und Bekanntmachung des Hinweises auf die Patenterteilung: **12.06.2024**
(21) Anmeldenummer: 17740343.3
(22) Anmeldetag: 05.07.2017
(51) Int. Cl.: G02B 21/00, G02B 21/36, G02B 27/58

(54) **VERFAHREN ZUM UNTERSUCHEN EINER PROBE SOWIE VORRICHTUNG ZUM AUSFÜHREN EINES SOLCHEN VERFAHRENS**
METHOD FOR EXAMINING A SAMPLE, AND DEVICE FOR CARRYING OUT SUCH A METHOD
PROCÉDÉ D'ANALYSE D'UN ÉCHANTILLON ET DISPOSITIF PERMETTANT LA MISE EN OEUVRE DUDIT PROCÉDÉ

(30) Priorität: 06.07.2016 LU 93143
(43) Veröffentlichungstag der Anmeldung: 15.05.2019
(73) Patentinhaber: Leica Microsystems CMS GmbH, 35578 Wetzlar (DE)
(72) Erfinder: KNEBEL, Werner, 76709 Kronau (DE); FAHRBACH, Florian, 68167 Mannheim (DE)
(74) Vertreter: Schaumburg und Partner Patentanwälte mbB
(86) Internationale Anmeldenummer: PCT/EP2017/066833
(87) Internationale Veröffentlichungsnummer: WO 2018/007469

(56) Entgegenhaltungen:
- WO-A1-2012/003259
- DE-A1-102012 013 163
- FRIEDRICH MIKE ET AL: "Axial resolution beyond the diffraction limit of a sheet illumination microscope with stimulated emission depletion", INTERNATIONAL SOCIETY FOR OPTICAL ENGINEERING, SPIE, PO BOX 10 BELLINGHAM WA 98227-0010 USA, Bd. 20, Nr. 10, 1. Oktober 2015 (2015-10-01), Seite 106006, XP060071808, ISSN: 1083-3668, DOI: 10.1117/1.JBO.20.10.106006 [gefunden am 2015-10-15]
- L. SILVESTRI ET AL: "Confocal light sheet microscopy: micron-scale neuroanatomy of the entire mouse brain", OPTICS EXPRESS, Bd. 20, Nr. 18, 27. August 2012 (2012-08-27), Seite 20582, XP055348754, DOI: 10.1364/OE.20.020582
- MIKE FRIEDRICH ET AL: "STED-SPIM: Stimulated Emission Depletion Improves Sheet Illumination Microscopy Resolution", BIOPHYSICAL JOURNAL, ELSEVIER, AMSTERDAM, NL, Bd. 100, Nr. 8, 29. Dezember 2010 (2010-12-29), Seiten L43-L45, XP028192802, ISSN: 0006-3495, DOI: 10.1016/J.BPJ.2010.12.3748 [gefunden am 2011-03-09]
- KAVYA MOHAN ET AL: "Three Dimensional Fluorescence Imaging Using Multiple Light-Sheet Microscopy", PLOS ONE, Bd. 9, Nr. 6, 9. Juni 2014 (2014-06-09), Seite e96551, XP055277114, DOI: 10.1371/journal.pone.0096551
- FLORIAN O. FAHRBACH ET AL: "Self-reconstructing sectioned Bessel beams offer submicron optical sectioning for large fields of view in light-sheet microscopy", OPTICS EXPRESS, Bd. 21, Nr. 9, 2. Mai 2013 (2013-05-02), Seite 11425, XP055290274, DOI: 10.1364/OE.21.011425

## Beschreibung

Die Erfindung betrifft Verfahren zum Untersuchen einer Probe sowie eine Vorrichtung zum Ausführen eines solchen Verfahrens.

Die Erfindung betrifft außerdem eine Vorrichtung, die zum Untersuchen einer Probe ausgebildet ist und die wenigstens eine Lichtquelle zum Erzeugen eines Beleuchtungslichtbündels, das wenigstens eine zur Fluoreszenzanregung der Probe geeignete Wellenlänge aufweist, und zum Erzeugen eines Abregungs- oder Schaltlichtbündels, das wenigstens eine zur Abregung der Probe geeignete Wellenlänge aufweist, beinhaltet und die wenigstens ein Beleuchtungsobjektiv zum Fokussieren des Beleuchtungslichtbündels und des Abregungs- oder Schaltlichtbündels beinhaltet.

Die SPIM-Technik (Single Plane Illumination Microscopy), bei der eine schichtweise Beleuchtung der Probe erfolgt, erlaubt eine schnellere und probenschonendere Erfassung von Bilddaten, als beispielsweise bei einer punktweisen Abtastung einer Probe. Ein bekanntes Einsatzgebiet der SPIM-Technologie ist der Bereich der Fluoreszenz-Mikroskopie, wobei Fluorophore in der Probe mit Laserlicht angeregt werden. Bei der SPIM-Technologie findet hierbei eine Anregung nur in einer von einem Beleuchtungslichtblatt (auch "Lichtstreifen" genannt) statt. Eine Schädigung der Probe durch Beleuchtungslicht in anderen Ebenen ist hierdurch vermieden.

Eine nach dem SPIM-Verfahren arbeitende optische Vorrichtung ist in DE 102 57 423 A1 beschrieben. Bei diesem Mikroskop wird eine Probe mit einem dünnen Lichtblatt beleuchtet, während die Beobachtung aus einer zu der Ebene des beleuchtenden Lichtblattes senkrechten Richtung erfolgt. Hierbei erfolgen die Beleuchtung und die Detektion über zwei separate optische Strahlengänge mit jeweils separater Optik. Das Lichtblatt wird von einer Zylinderlinse erzeugt. Für die Bildaufnahme wird die Probe durch das bezüglich des Detektors feststehende Lichtblatt bewegt, um schichtweise Fluoreszenz- und/oder Streulicht mit einem flächigen Detektor aufzunehmen. Die so gewonnenen Schichtbilddaten lassen sich anschließend zu einem aus einer dreidimensionalen Abbildung der Probe entsprechenden Datensatz zusammensetzen.

Aus DE 10 2010 060 121 A1 ist ein SPIM-Mikroskop bekannt, welches mit einer y-Richtungs-Beleuchtungsquelle und einer z-Richtungs-Detektionslicht-Kamera versehen ist. Ein x-Scanner erzeugt durch Scannen des Beleuchtungs-Lichtstrahls in x-Richtung ein sequentielles Lightsheet (Lichtblatt). Mittels einer Beleuchtungsoptik mit einer im Strahlengang des Beleuchtungs-Lichtstrahls angeordneten Zoomoptik ist die Fokuslänge des Beleuchtungslichtstrahls variierbar. Gemäß einer Ausführungsform kann wahlweise ein STED-Abregungsstrahl (Stimulated Emission Depletion) zugeschaltet werden, wozu eine Abregungslichtquelle vorgesehen ist, welche einen das sequentiell erzeugte Lightsheet in z-Richtung verdünnenden Abregungs-Lichtstrahl aus der y-Richtung auf das abzubildende Objekt sendet, wobei der Abregungs-Lichtstrahl in z-Richtung seitlich versetzt zum Beleuchtungs-Lichtstrahl auf das Objekt gesendet wird und parallel zu dem Beleuchtungs-Lichtstrahl in x-Richtung gescannt wird. Bevorzugt handelt sich um einen Abregungsstrahl, welcher in seinem Querschnitt so verändert wurde, dass dieser 2 Maxima aufweist, welche in z-Richtung gesehen vor und hinter dem Zentrum des Anregungsstrahls eine Nullstelle aufweist. Es ist jedoch auch möglich, zwei getrennte Laserstrahlen als Abregungsstrahlen vorzusehen, oder das Lightsheet auf nur einer Seite zu verdünnen, d. h. in z-Richtung gesehen nur entweder vor oder hinter dem Anregungsstrahl einen Abregungsstrahl anzuwenden.

Aus DE 10 2009 044 983 A1 ist ein Mikroskop bekannt, das eine Beleuchtungseinrichtung aufweist, mit der ein Lichtblatt zur Beleuchtung eines Probenbereichs erzeugt wird, welches in Richtung einer Beleuchtungsachse eines Beleuchtungsstrahlenganges und in Richtung einer Querachse, welche quer zur Beleuchtungsachse liegt, annähernd flächig ausgedehnt ist. Das Mikroskop weist außerdem eine Detektierungseinrichtung auf, mit der Licht detektiert wird, welches entlang einer Detektierungsachse eines Detektierungsstrahlengangs aus dem Probenbereich abgestrahlt wird, wobei Beleuchtungsachse und Detektierungsachse sowie Querachse und Detektierungsachse in einem von Null verschiedenen Winkel aufeinander stehen, und wobei die Detektierungseinrichtung außerdem im Detektierungsstrahlengang ein Detektierungsobjektiv umfasst. Bei einem solchen Mikroskop umfasst die Detektierungseinrichtung außerdem ein von einer Frontlinse des Detektierungsobjektivs räumlich getrennt angeordnetes und von dieser unabhängig verstellbares optisches Detektierungselement, mittels dessen die Größe eines Detektierungsbildfeldes stufenlos variierbar ist, und/oder mittels dessen eine Detektierungsfokusebene im Probenbereich stufenlos verschiebbar ist.

Aus Dean, K. & Fiolka, R., "Uniform and scalable light-sheets generated by extended focusing", Opt. Express 22, 26141-26152 (2014), ist ein System bekannt, bei dem ein dünner, kurzer Beleuchtungsstrahl mit einer schnell durchstimmbaren Linse entlang der optischen Achse vor und zurück geschoben wird. Durch die geringere Schärfentiefe des Strahls kann dieser dünner sein, was den Bildkontrast steigern soll. Da allerdings auch der out-of-focus Bereich des Strahls Fluoreszenz anregt, wird eine Schlitzblende verwendet, um den gewünschten Effekt zu erreichen. Diese Schlitzblende verläuft in einer konjugierten Ebene im Detektionsstrahlengang kollinear mit dem Beleuchtungsstrahl. Trotz der Nutzung der Schlitzblende fällt die Steigerung des Bildkontrastes relativ klein aus, insbesondere weil viel Fluoreszenzlicht detektiert wird, das nicht vom Fokus des Beleuchtungsstrahls angeregt wurde.

Aus Zong, W. et al. "Large-field high-resolution two-photon digital scanned light-sheet microscopy" Cell Res. (2014), ist ein ähnliches Mikroskop bekannt, wobei dort allerdings eine nichtlineare Fluoreszenz-Anregung erfolgt. Auch in CN 104407436 ist ein solches Mikroskop beschrieben.

In Gao, L., "Extend the field of view of selective plan illumination microscopy by tiling the excitation light sheet", Opt. Express, 23, 6102-6111 (2015), ist offenbart, das durch einen gescannten Beleuchtungsstrahl erzeugte Lichtblatt in mehreren, diskreten Schritten entlang der Beleuchtungsachse zu verschieben und dann die für jeden Schritt einzeln erhaltenen Bilder zusammenzufügen. Diese Methode hat den Nachteil, dass es lange dauert mehrere Einzelbilder nacheinander aufzunehmen. Des weiteren ist die effektive Dicke des beleuchteten Bereichs nicht gleichförmig über das Bildfeld entlang der Ausbreitungsrichtung des Beleuchtungsstrahls. Das Beleuchtungsstrahlbündel ist in der Mitte der einzelnen Bilder immer dünner als am Rand. Das aus Einzelbildern zusammengesetzte Bild besteht also abwechselnd aus Bereichen die mit dünnerem und dickerem Lichtbündel beleuchtet wurden, also mit höherem und niedrigerem Kontrast.

Aus Fahrbach, F. O., Voigt, F. F., Schmid, B., Helmchen, F. & Huisken, J. Rapid 3D light-sheet microscopy with a tunable lens. Opt. Express 21, 21010 (2013), ist es bekannt, zur schnellen Abbildung von Volumina, ein Light-sheet entlang der Detektionsachse schnell zu verschieben und die Schärfenebene der Detektionsoptik mit einer durchstimmbaren Linse nachzuführen.

Aus DE 10 2007 063 274 A1 ist ein Mikroskop, umfassend ein Abbildungsobjektiv zur Abbildung einer Probe auf einen Detektor und ein Mittel zur Beleuchtung der Probe mit einem Lichtblatt in der Fokusebene des Abbildungsobjektivs, das eine kohärentes Licht abstrahlende Beleuchtungsquelle beinhaltet. Bei diesem Mikroskop umfassen die Mittel zur Beleuchtung eine Besseloptik, die aus dem Lichtstrahl mindestens zwei ebene Wellen erzeugt und den ebenen Wellen Ausbreitungsrichtungen vorgibt, wobei die Ausbreitungsrichtung jeder der ebenen Wellen mit der Fokusebene jeweils einen spitzen Winkel einschließt, dessen Betrag für jede der ebenen Wellen gleich ist, so dass die ebenen Wellen in der Fokusebene konstruktiv interferieren, wodurch ein Lichtblatt erzeugt wird. In ähnlicher Weise können die Mittel zur Beleuchtung auch ein optisches Element, mit dem aus dem Lichtstrahl ein rotationssymmetrischer Besselstrahl erzeugt wird, zur dynamischen Erzeugung eines Lichtblatts umfassen.

Aus DE 10 2008 009 216 A1 ist eine Vorrichtung und ein Verfahren zum räumlich hochauflösenden Abbilden einer Struktur einer Probe bekannt. Die Vorrichtung weist ein beugungsbegrenztes Auflösungsvolumen mit mehreren zwischen unterschiedlichen Zuständen umschaltbaren Farbstoffmolekülen auf, wobei zumindest ein Zustand fluoreszierend ist. Das Fluoreszenzlicht wird mit einem Objektiv gesammelt und mit einem optischen System auf einen ortsauflösenden Detektor abgebildet, wobei die Farbstoffmoleküle in mindestens einem Teil der Probe eine Verteilungsdichte aufweisen, die größer ist als das Inverse des beugungsbegrenzten Auflösungsvolumens. Die Vorrichtung beinhaltet außerdem eine oder mehrere Lichtquellen zur Aussendung einer Umschaltstrahlung, um eine erste Untermenge der Farbstoffmoleküle in der Probe umzuschalten, und zur Aussendung einer Anregungsstrahlung, um die erste Untermenge der Farbstoffmoleküle anzuregen. Mindestens eine der Lichtquellen ist derart angeordnet, dass sie die Probe durchstrahlt und eine Umschaltung und/oder Fluoreszenzanregung der Farbstoffmoleküle in der Probe zumindest in einer Richtung annähernd senkrecht zur optischen Achse und insbesondere im Fokus des Objektivs erfolgt, wobei vorteilhaft die Umschaltung eine Photoaktivierung oder -deaktivierung der Farbstoffmoleküle ist und die Lichtquelle zur Umschaltung und/oder die Lichtquelle zur Anregung eine Fokussieranordnung zur Erzeugung eines in Richtung der Beleuchtung ausgedehnten, zumindest in einer Richtung zumindest annähernd senkrecht zur optischen Achse des Objektivs linienartig ausgedehnten Beleuchtungsbereichs aufweist.

Aus DE 10 2009 008 646 A1 ist ein Verfahren zum Erfassen eines Chromophors an einer Fläche in einer Probe, insbesondere zum Abbilden einer Konzentration des Chromophors an der Fläche in der Probe, bekannt. Hierbei ist vorgesehen, dass zumindest die Fläche in der Probe mit Licht mit einer ersten Photonenenergie, die einem ersten Übergang des Chromophors in einen ersten Zustand entspricht, bestrahlt wird. Zumindest ein Bereich in der Umgebung der Fläche in der Probe wird mit Licht mit einer zweiten Photonenenergie, die einem zweiten Übergang des Chromophors in einen zweiten Zustand entspricht, bestrahlt, wobei die Intensität des Lichts mit der zweiten Photonenenergie in der Fläche ein Minimum aufweist. Einer Teilmenge des Chromophors, die nach dem Bestrahlen der Probe mit Licht mit der ersten Photonenenergie und mit Licht mit der zweiten Photonenenergie sich im ersten Zustand befindet, wird erfasst, um den Chromophor in der Fläche zu erfassen. Die abbildende Optik ist insbesondere senkrecht oder im Wesentlichen senkrecht zu der Fläche angeordnet.

Aus EP 2 444 832 A1 ist ein SPIM-Mikroskop beschrieben, welches mit einer y-Richtungs-Beleuchtungsquelle und einer z-Richtungs-Detektionslicht-Kamera versehen ist. Ein x-Scanner erzeugt durch Scannen des Beleuchtungs-Lichtstrahls in x-Richtung ein sequentielles Lightsheet. Durch wahlweises Hinzuschalten eines STED-Abregungsstrahls lässt sich das Lightsheet wahlweise verdünnen und damit die optische Auflösung erhöhen. ES können "Tunable Acoustic Gradient Index of Refraction Linsen", kurz TAG Linsen genannt, verwendet werden, welche eine variable Möglichkeit bereitstellen, den Anregungsstrahl zu modulieren. Derartige TAG Linsen stellen ein alternatives Verfahren zum Erzeugen eines Besselbeams dar. In solchen TAG Linsen ist eine lichtbrechende Flüssigkeit innerhalb eines kreisrunden piezoelektrischen Elements enthalten und wird von einem Wechselstrom-Signal angeregt, um einen alternierenden Brechungsindex in der Flüssigkeit zu erzeugen. Änderungen in der Amplitude in der Frequenz des Anregungs-Signals erlauben eine schnelle Änderung des übertragenen Musters. Gemäß einer weiteren bevorzugten Ausführungsform der Erfindung ist eine Phasenplatte vorgesehen, welche den Abregungs-Lichtstrahl moduliert. Der Abregungsstrahl kann so moduliert werden, dass die Anregung nur seitlich eingeengt wird, um ein dünneres Lightsheet zu erhalten. Hierzu reicht eine einzige Phasenplatte. Es ist alternative aber auch möglich, den jeweiligen Anregungspunkt allseitig einzugrenzen.

Aus DE 20 2011 110 077 U1 ist eine Anordnung zum Beleuchten einer Probe bei der SPIM-Mikroskopie bekannt. Die Anordnung weist eine Lichtquelle zum Erzeugen eines Lichtbündels, Mittel zum Erzeugen eines Lichtstreifens aus dem Lichtbündel, insbesondere zum im Wesentlichen flächenartigen Beleuchten einer Probe in einer Beleuchtungsebene aus wenigstens einer Richtung, wenigstens ein Objektiv, das eine Optik aufweist, die dazu ausgebildet und bestimmt ist, von der Probe ausgehendes Detektionslicht direkt oder indirekt einem Detektor zuzuführen, wobei die Optik des Objektivs mit dem Lichtstreifen in Wechselwirkung tritt, und eine der Optik des Objektivs nachgeschaltete Umlenkvorrichtung zum Umlenken des Lichtstreifens, wobei sich der Lichtstreifen nach dem Umlenken zum Beleuchten einer Probe in einem von Null Grad verschiedenen Winkel, insbesondere einem rechten Winkel, zur optischen Achse des Objektivs ausbreitet und/oder in einer optischen Achse des Objektivs nicht parallelen Ebene angeordnet ist.

Ein Verfahren nach dem Oberbegriff des Anspruchs 1 ist bekannt aus Friedrich Mike et al: "Axial resolution beyond the diffraction limit of a sheet illumination microscope with stimulated emission depletion", INTERNATIONAL SOCIETY FOR OPTICAL ENGINEERING, SPIE, PO BOX 10 BELLINGHAM WA 98227-0010 USA, Bd. 20, Nr. 10, 1. Oktober 2015 (2015-10-01), Seite 106006, XP060071808, ISSN: 1083-3668, DOI: 10.1117/1.JBO.20.10.106006. Ferner wird verwiesen auf das Dokument L. Silvestri et al: "Confocal light sheet microscopy: micronscale neuroanatomy of the entire mouse brain", OPTICS EXPRESS, Bd. 20, Nr. 18, 27. August 2012 (2012-08-27), Seite 20582, XP055348754, DOI: 10.1364/OE.20.020582. Daraus ist ein Lichtblattmikroskop bekannt, bei dem der Kontrast durch eine koknfokale Liniendetektion unter Verwendung eines Spaltes erhöht wird.

Es ist daher die Aufgabe der vorliegenden Erfindung, ein Verfahren anzugeben, das die Erzeugung einer kontrastreichen Abbildung einer dünnen Schicht einer Probe ermöglicht.

Die Aufgabe wird durch das in Anspruch 1 definierte Verfahren gelöst.

Es ist eine weitere Aufgabe der vorliegenden Erfindung, eine Vorrichtung zum Untersuchen einer Probe anzugeben, die die Erzeugung einer möglichst kontrastreichen Abbildung einer dünnen Schicht einer Probe ermöglicht.

Die Aufgabe wird durch eine Vorrichtung gemäß Anspruch 11 gelöst.

Der im Anspruch definierte zweite Unterbereich könnte insbesondere der Bereich sein einschließlich und um die Nullstelle des Abregungsstrahls, in dem die Wechselwirkungswahrscheinlichkeit eines Moleküls mit dem Schaltlichtstrahl kleiner 10%, 5%, 1% ist. Unter einer Probenlinie im Sinn der vorliegenden Erfindung ist insbesondere auch ein Probenstreifen zu verstehen, der eine vorgebbare Ausdehnung quer zu seiner Längsrichtung haben kann.

In erfindungsgemäßer Weise wurde außerdem erkannt, dass eine wirksame Unterdrückung der Fluoreszenz mittels STED eine extrem hohe Intensität der Lichtleistung des Abregungslichtbündels erfordert, so dass eine Abregung auf einen räumlich engen Bereich konzentriert werden muss. Insbesondere ist es nicht möglich und auch nicht sinnvoll, die für eine ausreichend wahrscheinliche Wechselwirkung des Abregungs- oder Schaltlichtbündels mit den Probenmolekülen erforderlichen Lichtleistungsdichten in der gesamten weiteren Umgebung des Probenbereichs, aus dem Fluoreszenzlicht detektiert werden soll, zu erzielen. Wird dies nicht beachtet, erzielt man mittels des Abregungslichtbündels lediglich eine sehr geringe Verbesserung des Auflösungsvermögens und/oder schädigt sogar die Probe. Es wurde weiter erkannt, dass deswegen störendes Fluoreszenzlicht in dieser weiteren Umgebung entsteht und zum Detektor gelangt, was sich im Ergebnis nachteilig auf den Kontrast der Abbildung auswirkt. Dies vermeidet die vorliegende Erfindung erfolgreich.

Insbesondere wurde erkannt, dass eine effiziente Abregung der Ringstruktur bei einer STED-SPIM-Anwendung unter Verwendung von Bessel-Strahlen nicht zu realisieren ist. Die Unterdrückung der Fluoreszenz mittels langer, schwach fokussierter Gauß-Strahlen ist auf Grund der geringen Intensität wenig wirksam. Dieser geringen Wirksamkeit steht eine nicht unerhebliche Belastung der Probe durch die Beaufschlagung mit dem Abregungslicht und die damit einher gehenden phototoxischen Effekte gegenüber.

Es ist zumeist so, dass lediglich das Fluoreszenzlicht detektiert werden soll, das aus dem Bereich stammt, in dem das Abregungs- und/oder Schaltlichtbündel eine Nullstelle aufweist. Hierbei ist der zweite Unterbereich dadurch definiert, dass er den Bereich einschließt, in dem der Abregungs- oder Schaltlichtstrahl eine durch Beugung und/oder Interferenz hervorgerufene Nullstelle aufweist, wobei im Sinne der vorliegenden Erfindung insbesondere auch dann eine Nullstelle vorliegt, wenn die Lichtleistung auf Grund technischer Imperfektionen oder Streuung in der Probe nicht genau Null beträgt. Der Erfindung liegt insoweit insbesondere die Idee zu Grunde, die Zahl der abzuregenden Fluorophore zu minimieren. Es wird insbesondere durch das laterale und/oder axiale Ausblenden des von außerhalb des ersten und zweiten Unterbereichs stammenden Fluoreszenzlichts, so dass immer nur Detektionslicht aus dem gerade tatsächlich interessierenden Bereich, beispielsweise einem schmalen Streifen im Objekt entlang des Beleuchtungslichtbündels, detektiert wird, was insbesondere den Bildkontrast erhöht. Der zweite Unterbereich kann abschnittweise oder auch in der zu untersuchenden Probenebene rundherum und/oder vollständig von dem ersten Unterbereich umgeben sein.

Eine besonders effiziente Möglichkeit STED/RESOLFT mit SPIM derart zu kombinieren, dass das Abregungs- oder Schaltlichtbündel eine vergleichsweise geringe Leistung haben muss, besteht darin, ein Beleuchtungslichtbündel zu verwenden, das diesen schmalen Bereich/Streifen parallel zur Beleuchtungsachse und in der Beleuchtungsebene (Lichtblattebene) von der Seite derart beleuchtet, dass der Überlapp zwischen Anregungs- und Detektions-PSF minimiert wird. Wie weiter unten noch im Detail beschrieben ist, kann die Beleuchtung vorteilhaft seitlich (insbesondere entlang der Scanrichtung) durch sogenannte sectioned Bessel-Strahlen erfolgen. Ein entscheidender Vorteil einer solchen Kombination liegt darin, dass das Abregungs- oder Schaltlichtbündel lediglich verwendet werden muss, um einen sehr geringen Teil der Moleküle abzuregen, da der Überlapp von Detektions- und Anregungs-PSF sehr klein ist. Die wenigen abzuregenden Moleküle befinden sich vorteilhaft weiter entfernt von der nominellen Fokusebene des Detektionsobjektivs, als die gewünschte axiale Auflösung.

Die Erfindung führt vorteilhaft dazu, dass eine Detektion von Fluoreszenzlicht, welches aus Regionen mit zu großem Abstand zur Fokusebene des Detektionsobjektivs stammt, weitgehend durch das Ausblenden unterdrückt wird. Dies kann, was weiter unten noch im Detail erläutert ist, lateral oder axial erfolgen. Außerdem wird die Beleuchtung vorzugsweise so gewählt, dass der Überlapp von Detektions-PSF und Beleuchtungs-PSF möglichst klein gehalten wird, beispielsweise indem eine konfokal detektierte Linie von der Seite beleuchtet wird und/oder die optische Achse des Detektionsobjektivs senkrecht zur Probenebene ausgerichtet wird. Außerdem werden die im Überlappungsbereich außerhalb der Beleuchtungs-PSF und Detektions-PSF liegenden Fluoreszenzmoleküle in den Bereichen abseits der Fokusebenen des Detektionsobjektivs mittels des Abregungs- oder Schaltlichtbündels abgeregt, was das Optical Sectioning und das Auflösungsvermögen weiter verbessert.

Das Beleuchtungslichtbündel kann insbesondere als Gaußstrahl oder als Bessel-Strahl oder als sectioned Besselstrahl oder als Mathieustrahl ausgebildet sein. Bei einer besonderen Ausführung weist die wenigstens eine Lichtquelle ein Lichtbeeinflussungsmittel auf, das aus einem Primärbeleuchtungslichtbündel, das beispielsweise ein von einem Laser emittierter Gauß-Strahl sein kann, einen Bessel-Strahl oder einen sectioned Besselstrahl oder ein Mathieustrahl erzeugt. Das Lichtbeeinflussungsmittel kann hierzu beispielsweise ein SLM (spatial light modulator) oder eine Kombination aus einem Axikon und einer Spaltblende beinhalten.

Der Hintergrund einer Beleuchtung unter Verwendung von Besselstrahlen oder sectioned-Bessel-Strahlen ist folgender:
Wenn man das durch eine Ringblende tretende Licht fokussiert, entstehen entlang der optischen Achse im Bereich des Fokus aufgrund konstruktiver Interferenz Intensitätsmaxima. Im Längsquerschnitt ist der Bereich der Interferenz der ebenen Wellen, die aus unterschiedlichen Richtungen aber mit im Wesentlichen gleichem Winkel gegenüber der optischen Achse verlaufen, im Wesentlichen rautenförmig ausgebildet. Eine Störung in einem kleinen Teilbereich des ringförmigen Beleuchtungslichtbündels wirkt sich im Bereich des Fokus auf der optischen Achse nahezu gar nicht aus, weil dort das gesamte Beleuchtungslicht interferiert. Ein Ausblenden in einem kleinen Teilbereich außerhalb der optischen Achse hat folglich auf die konstruktive Interferenz nahezu keinen Einfluss. In den Bereichen des Fokus mit einem Axialabstand zur optischen Achse wird eine Störung im Bereich des einfallenden Lichtes dadurch "geheilt", dass das übrige Licht hinter der Störung einen Schattenwurf durch die Störung überdeckt.

Ein mit einer ringförmigen Ausleuchtung der Pupille erzeugter Besselstrahl ist in Bezug auf die optische Achse rotationssymmetrisch. Darüber hinaus weist ein solcher Besselstrahl in einem Querschnitt senkrecht zur optischen Achse Intensitätsmaxima in Form konzentrischer Ringe auf, wobei sich auf der optischen Achse das größte Intensitätsmaximum befindet.

Blendet man nun von dem im Querschnitt ringförmigen Beleuchtungslicht, insbesondere symmetrisch, Segmente aus, so spricht man von einem "sectioned Bessel-beam". Beispielsweise könnte man eine Ringblende verwenden, bei der zusätzlich zwei einander spiegelsymmetrisch gegenüberliegende Umfangsbereiche abgedeckt sind oder eine Ringblende in Kombination mit einer Spaltblende. Das Licht tritt dann nur noch durch die zwei dazwischen liegenden Umfangsbereiche der Ringblende. Der Fokus eines solchen "sectioned Bessel-beam" ist im Querschnitt senkrecht zur optischen Achse nicht rotationssymmetrisch. Vielmehr sind bei einem solchen "sectioned Bessel-beam" Teile der ursprünglich ringförmigen Intensitätsmaxima ausgeblendet, so dass nebeneinanderliegende, zur optischen Achse konkav ausgerichtete gebogene Intensitätsmaxima, nämlich Ringsegmente (engl.: "section rings") verbleiben.

Vorzugsweise wird wenigstens ein Teil der Probenebene durch Verschieben des Überlappungsbereichs sukzessive abgetastet. Insbesondere kann vorteilhaft vorgesehen sein, dass wenigstens ein Teil der Probenebene durch Verschieben des Überlappungsbereichs sukzessive abgetastet wird, indem ein Fokus des Beleuchtungslichtbündels in der Probenebene verschoben wird, wobei ein Fokus des Abregungs- oder Schaltlichtbündels synchron zu dem Fokus des Beleuchtungslichtbündels mitverschoben wird.

Beispielsweise kann wenigstens ein Teil der Probenebene sukzessive abgetastet werden, indem ein, insbesondere vergleichsweise kurzer, Fokus des Beleuchtungslichtbündels zusammen mit dem Fokus des Abregungs- oder Schaltlichtbündels in Lichtausbreitungsrichtung, also entlang der Probenlinie, verschoben wird. Hierbei ist unter einem kurzen Fokus zu verstehen, dass die Fokussierung so stark ist, dass die dadurch erreichte Schärfentiefe des Strahls nicht der Länge des gesamten abzubildenden Streifens entlang der Probenlinie entspricht und/oder dass die Ausdehnung des Fokus entlang der Detektionsachse geringer ist, als sie es für einen Strahl wäre, dessen Schärfentiefe der Ausdehnung des abzubildenden Streifens entlang der Beleuchtungsrichtung entspricht. Sobald auf diese Weise der zu untersuchende Teil der Probenebene durchlaufen wurde, kann der Vorgang jeweils entlang der jeweils benachbarten Probenlinie fortlaufend wiederholt werden, bis der zu untersuchende Teil der Probenebene in zwei Dimensionen abgetastet ist. Insbesondere bei dieser Ausführung kann der Detektor als Spaltdetektor ausgebildet sein, wobei die Spaltbreitenrichtung parallel zur Längserstreckungsrichtung der Abbildung der Probenlinie in die Detektionsebene ausgerichtet ist. Auf diese Weise wird ein axiales Ausblenden des unerwünschten Fluoreszenzlichtes erreicht.

Nach einem anderen Beispiel kann wenigstens ein Teil der Probenebene sukzessive abgetastet werden, indem ein, insbesondere vergleichsweise langer, Fokus des Beleuchtungslichtbündels zusammen mit dem Fokus des Abregungs- oder Schaltlichtbündels senkrecht zur Lichtausbreitungsrichtung, also senkrecht zur der Probenlinie, verschoben wird, bis der zu untersuchende Teil der Probenebene in zwei Dimensionen abgetastet ist. Insbesondere bei dieser Ausführung kann der Detektor als Spaltdetektor ausgebildet sein, wobei die Spaltbreitenrichtung senkrecht zur Längserstreckungsrichtung der Abbildung der Probenlinie in die Detektionsebene ausgerichtet ist. Auf diese Weise wird ein laterales Ausblenden des unerwünschten Fluoreszenzlichtes erreicht.

Bei einer besonderen Ausführung des erfindungsgemäßen Verfahrens weist das Abregungs- oder Schaltlichtbündel dieselbe Ausbreitungsrichtung auf, wie das Beleuchtungslichtbündel. Es ist jedoch auch möglich, dass das Beleuchtungslichtbündel und das Abregungs- oder Schaltlichtbündel entgegengesetzte Ausbreitungsrichtungen aufweisen. Insoweit kann vorteilhaft allgemein vorgesehen sein, dass das Abregungs- oder Schaltlichtbündel eine zur Ausbreitungsrichtung des Beleuchtungslichtbündels parallele Ausbreitungsrichtung aufweist.

Besonders gute Ergebnisse lassen sich mittels einer Ausführung erreichen, bei der das Abregungs- oder Schaltlichtbündel ein zirkularsymmetrisches Querschnittsprofil aufweist oder bei der das Abregungs- oder Schaltlichtbündel im Querschnitt zwei Maxima aufweist, die symmetrisch um eine Nullstelle angeordnet sind. Insbesondere ist es in jedem Fall von Vorteil, wenn das Abregungs- oder Schaltlichtbündel eine zentrale Nullstelle aufweist.

Das Abregungs- oder Schaltlichtbündel kann vorteilhaft beispielsweise aus wenigstens einem Laguerre-Gauß oder Laguerre-Bessel-Strahl gebildet sein.

Wie bereits angesprochen, wird bei einer ganz besonders vorteilhaften Ausführung wenigstens ein flächiger Teil der Probenebene sukzessive Probenlinie für Probenlinie abgetastet, indem das Beleuchtungslichtbündel in der Probenebene, insbesondere senkrecht zu seiner Ausbreitungsrichtung, verschoben wird. Das Abregungs- oder Schaltlichtbündel wird hierbei synchron zu dem Beleuchtungslichtbündel mitverschoben. Um das gesamte Bildfeld sukzessive zu untersuchen, kann das Beleuchtungslichtbündel zusammen und synchron mit dem Abregungs- oder Schaltlichtbündel während des Detektierens in der Probenebene insbesondere senkrecht zur Ausbreitungsrichtung des Beleuchtungslichtbündels bewegt werden. Insbesondere kann das Beleuchtungslichtbündel zusammen und synchron mit dem Abregungs- oder Schaltlichtbündel während des Detektierens in der Beleuchtungsebene senkrecht zur Ausbreitungsrichtung des Beleuchtungslichtbündels fortlaufend hin und her bewegt werden.

Insbesondere zu diesem Zweck kann bei der erfindungsgemäßen Vorrichtung wenigstens eine hinsichtlich des Ablenkwinkels einstellbare Beleuchtungs-Strahlablenkeinrichtung im Strahlengang des Beleuchtungslichtbündels angeordnet sein, mittels der das Beleuchtungslichtbündel, insbesondere senkrecht zu seiner Ausbreitungsrichtung, in der Probenebene relativ zur Probe verschoben werden kann. Hierbei kann insbesondere auch vorgesehen sein, dass die Beleuchtungs-Strahlablenkeinrichtung auch das Abregungs- oder Schaltlichtbündel ablenkt, wodurch auf einfache Weise eine synchrone Ablenkung des Beleuchtungslichtbündels und des Abregungs- oder Schaltlichtbündels erreicht wird. Es ist alternativ jedoch auch möglich, dass eine weitere Beleuchtungs-Strahlablenkeinrichtung vorhanden ist, die das Abregungs- oder Schaltlichtbündel synchron zur Bewegung des Beleuchtungslichtbündels ablenkt.

Eine besonders hohe Auflösung ist bei einer Ausführung des erfindungsgemäßen Verfahrens erzielbar, bei der die Position des Beleuchtungslichtbündels zusätzlich dem Verschieben für ein sukzessives Abtasten der Probenebene hochfrequent mit kleiner Amplitude moduliert wird. Konkret kann beispielsweise vorgesehen sein, dass die Position des Beleuchtungslichtbündels zusätzlich zu dem für ein sukzessives Abtasten der Probenebene nötigen Verschieben mit einer Frequenz moduliert wird, die größer ist als das Dreifache von tₑₓₚ, wobei tₑₓₚ die Belichtungszeit des Detektors ist. Vorteilhaft kann die Amplitude der Modulation derart gewählt sein, dass sie im Probenvolumen wenigstens λ/NA, insbesondere 3λ/NA, entspricht, wobei λ die Wellenlänge des Beleuchtungslichts und NA die numerische Apertur unter der das Beleuchtungslichtbündel (1) fokussiert wird. Bei asymmetrischer Fokussierung kann die Amplitude vorteilhaft derart gewählt sein, dass sie im Probenvolumen wenigstens λ/NAₓ, insbesondere 3λ/NAₓ, entspricht, wobei Naₓ der Betrag der NA entlang der Scanachse ist.

Zu diesem Zweck kann ein Modulator vorhanden sein, der beispielsweise in der Weise ausgebildet ist, dass einem elektrischen Ansteuersignal für die Beleuchtungs-Strahlablenkeinrichtung zusätzlich ein Modulationssignal überlagert wird, so dass die Beleuchtungs-Strahlablenkeinrichtung zusätzlich zu einem sukzessiven Verschieben des Beleuchtungslichtbündels und des Abregungs- oder Schaltlichtbündels auch eine hochfrequente Positionsmodulation bewirkt.

Die erfindungsgemäße Vorrichtung kann vorteilhaft eine, insbesondere elektronische und/oder computerbasierte, Steuerungsvorrichtung aufweisen, mit der die Position des Detektors, insbesondere Spaltdetektors, in der Detektionsebene und die Position des Beleuchtungslichtbündels und des Abregungs- und Schaltlichtbündels in der Beleuchtungsebene sowie gegebenenfalls die oben erwähnte zusätzliche Modulation der Position des Beleuchtungslichtbündels gesteuert werden.

Das Detektionslicht wird zur Realisierung einer konfokalen Liniendetektion mit Hilfe eines Spaltdetektors detektiert, wobei die Spaltbreitenrichtung des Spaltdetektors vorzugsweise senkrecht zur Längserstreckungsrichtung der Abbildung des Beleuchtungsstreifens in die Detektionsebene ausgerichtet ist. Der Spaltdetektor kann auf ganz unterschiedliche Weise ausgebildet sein. Nachfolgend sind einige zur Durchführung des erfindungsgemäßen Verfahrens besonders vorteilhafte Ausführungen von Spaltdetektoren beschrieben.

Beispielsweise kann der Spaltdetektor Teil eines Flächendetektors sein. Bei einer ganz besonders vorteilhaften Ausführung ist der Spaltdetektor durch den jeweils aktiv geschalteten Teil eines in der Detektionsebene angeordneten Flächendetektors gebildet. Der Flächendetektor kann beispielsweise ein CMOS-Detektor oder sCMOS-Detektor sein.

Es ist beispielsweise vorteilhaft möglich, lediglich einen Teil des Flächendetektors, nämlich den Teil, der gerade dem Spaltdetektor entspricht, auszulesen (aktiv geschalteter Teil), während die übrigen Teile des Flächendetektors, nämlich die Teile, die außerhalb des Spaltdetektors liegen, nicht ausgelesen werden (nicht aktiv geschalteter Teil).

Bei einer solchen Ausführung sind mechanische Bauteile, wie beispielsweise eine mechanische Spaltblende, vermieden, was insbesondere von Vorteil ist, wenn es darum geht, den Spaltdetektor, insbesondere synchron zu einer Bewegung des Beleuchtungslichtbündels und des Abregungs- oder Schaltlichtbündels und/oder zu einer Bewegung des Fokus des Beleuchtungslichtbündels und des Fokus des Abregungs- oder Schaltlichtbündels, in der Detektionsebene zu verschieben. Bei einer solchen Ausführung kann nämlich der Flächendetektor, insbesondere relativ zum Detektionsobjektiv und/oder zum Beleuchtungsobjektiv und/oder zur Probe und/oder relativ zum einfallenden Detektionslicht, ortsfest bleiben, wobei zeitlich nacheinander unterschiedliche Teile der Sensorfläche des Flächendetektors, die dann jeweils den Spaltdetektor bilden, aktiv geschaltet werden derart, dass jeweils ausschließlich das auf den aktiv geschalteten Teil fallende Detektionslicht detektiert wird, während Detektionslicht, das auf die jeweils inaktiv geschalteten Teile des Flächendetektors fällt, nicht detektiert wird.

Insbesondere kann vorteilhaft vorgesehen sein, dass das Aktiv-Schalten kontinuierlich erfolgt, so dass jeweils ein Bereich aktiv geschalteter Pixel einfach gleichförmig und synchron zu einer Bewegung des Beleuchtungslichtbündels und des Abregungs- oder Schaltlichtbündels den Sensor entlang läuft. Im Ergebnis resultiert eine räumlich ununterbrochene Bewegung des Spaltdetektors, ohne dass hierfür mechanische Bauteile bewegt werden müssen. Insoweit hat eine solche Ausführung den besonderen Vorteil einer großen Langlebigkeit, weil ein bewegungsbedingter Verschleiß, beispielsweise von mechanischen Blendenden, vermieden ist.

Bei einer anderen, alternativen Ausführung weist der Spaltdetektor einen in der Detektionsebene angeordneten Flächendetektor, beispielsweise einen CMOS-Detektor oder einen sCMOS-Detektor auf, dem eine, insbesondere mechanische, Spaltblende vorgeschaltet ist, wobei der Flächendetektor vorzugweis stets bezüglich seiner gesamten Sensorfläche aktiv geschaltet ist. insbesondere um den Spaltdetektor bewegen zu können, kann diese Spaltblende beispielsweise durch einen mechanischen Verschlussvorhang, wie er in Spiegelreflexkameras Verwendung findet, ausgeführt sein. Der Flächendetektor kann bei dieser Ausführung bezüglich seiner gesamten Sensorfläche, insbesondere auch während die Spaltblende und/oder das Beleuchtungslichtbündel und/oder der Fokus des Beleuchtungslichtbündels bewegt werden, aktiv sein.

Auch bei einer Ausführung des Spaltdetektors mit einer Spaltblende, kann vorgesehen ein, dass der Spaltdetektor, insbesondere durch Verschieben der Spaltblende, in der Detektionsebene relativ zu dem einfallenden Detektionslicht, insbesondere in Spaltbreitenrichtung oder senkrecht zur Spaltbreitenrichtung, bewegt wird.

Die Spaltblende kann besonders vorteilhaft auch als nicht-mechanisches Bauteil ausgeführt werden. Zum Beispiel als abschnittsweise schaltbarer Spiegel/Absorber z.B. auf Basis von Flüssigkristallen. Besonders vorteilhaft lässt sich eine solche Ausführung spektralen Filtern kombinieren. Die Spaltblende kann vorteilhaft beispielsweise durch sukzessives Lichtdurchlässig-Schalten und Lichtundurchlässig-Schalten jeweils benachbarter Teile des SLM (spatial light modulator) bewegt werden, wodurch im Ergebnis eine sich, insbesondere kontinuierlich, bewegende Blende erreicht wird.

Wie bereits erwähnt, kann vorteilhaft vorgesehen sein, dass das Beleuchtungslichtbündel zusammen und synchron mit dem Abregungs- oder Schaltlichtbündel während des Detektierens in der Beleuchtungsebene relativ zur Probe bewegt wird. Hierzu kann beispielsweise eine hinsichtlich des Ablenkwinkels einstellbare Detektions-Strahlablenkeinrichtung verwendet werden. Eine solche Detektions-Strahlablenkeinrichtung kann beispielsweise wenigstens einen Galvanometerspiegel aufweisen. Bei einer Vorrichtung, die auf der Basis eines Rastermikroskops aufgebaut ist, kann beispielsweise auch die ohnehin vorhandene Strahlablenkvorrichtung des Rastermikroskops, insbesondere eines konfokalen Rastermikroskops, verwendet werden; dies insbesondere auch wenn die erfindungsgemäße Vorrichtung durch Umrüstung eines Rastermikroskops hergestellt ist oder das erfindungsgemäße Verfahren mithilfe eines Rastermikroskops ausgeführt wird.

Bei einer alternativen Ausführung wird das Detektionslicht mittels einer im Detektionsstrahlengang angeordneten und hinsichtlich des Ablenkwinkels einstellbaren Detektions-Strahlablenkeinrichtung, die synchron zu einem Verschieben des Beleuchtungslichtbündels angesteuert wird, zu einem relativ zur Probe und/oder relativ zu einem Detektionsobjektiv feststehenden Spaltdetektor umgelenkt. Dies entspricht einem Spaltdetektor mit Descanning-Spiegel, also einem im Detektionsstrahlengang angeordneten Scan-Spiegel, der derart mit dem Scanspiegel im Beleuchtungsstrahlengang synchronisiert ist, dass die beleuchtete Linie auf einen ortsfesten Zeilensensor abgebildet wird. Dabei kann der Aufbau aber auch so realisiert sein, dass ein und derselbe Spiegel sowohl für Beleuchtungs- als auch Detektionslicht verwendet wird wodurch die Synchronisation vorteilhafterweise entfällt. Der Zeilensensor kann auch mehrere Pixel-Zeilen umfassen wobei in diesem Fall ein schrittweises Abtasten der Probe erfolgen muss.

Bei einer ganz besonders vorteilhaften Ausführung werden der Fokus des Beleuchtungslichtbündels und/oder der Fokus des Abregungs- oder Schaltlichtbündels während des Detektierens parallel zur Ausbreitungsrichtung des Beleuchtungslichtbündels und entlang der Probenlinie bewegt. Eine solche Ausführung erlaubt es, die Probenlinie sukzessive, insbesondere kontinuierlich, mit einem räumlich sehr schmalen und stark fokussieren Fokus des Beleuchtungslichtbündels, dem ein entsprechend schmaler Fokus des Abregungs- oder Schaltlichtbündels überlagert ist, abzuscannen, wodurch eine noch weiter gesteigerte Auflösung erzielbar ist. Hierbei ist unter einem schmalen und stark fokussieren Fokus zu verstehen, dass die Fokussierung so stark ist, dass die dadurch erreichte Schärfentiefe des Strahls nicht der Länge des abzubildenden Streifens der Probenebene entspricht und/oder dass die Ausdehnung des Fokus entlang der Detektionsachse geringer ist, als sie es für einen Strahl wäre, dessen Schärfentiefe der Ausdehnung des abgebildeten Streifens entlang der Beleuchtungsrichtung entspricht.

Hierbei kann um einen flächigen Teil der Probenebene abzutasten vorgesehen sein, dass das Beleuchtungslichtbündel in der Probenebene sukzessive, insbesondere senkrecht zu seiner Ausbreitungsrichtung, verschoben wird, und so wenigstens ein Teil der Probenebene Probenlinie für Probenlinie abgetastet wird, wobei jeweils beim Abtasten einer Probenlinie der Fokus des Beleuchtungslichtbündels entlang der jeweiligen Probenlinie bewegt wird.

Um den Fokus des Beleuchtungslichtbündels und/oder den Fokus des Abregungs- oder Schaltlichtbündels während des Detektierens parallel zur Ausbreitungsrichtung des Beleuchtungslichtbündels und entlang der Probenlinie zu bewegen, sind unterschiedliche Vorgehensweisen möglich, von denen nachfolgend beispielshaft einige im Detail erläutert werden.

Beispielsweise kann eine Fokusschiebevorrichtung eine Zoomoptik oder wenigstens eine Linse mit veränderbarer Brennweite aufweisen, die es ermöglicht, den Fokus des Beleuchtungslichtbündels und/oder den Fokus des Abregungs- oder Schaltlichtbündels während des Detektierens parallel zur Ausbreitungsrichtung des Beleuchtungslichtbündels und entlang der Probenlinie zu bewegen. Eine solche Fokusschiebevorrichtung hat den Vorteil, dass das Beleuchtungsobjektiv relativ zur Probe ortsfest bleiben kann, so dass eine Beeinflussung der Probe, insbesondere wenn ein Immersionsmittel zu Einsatz kommt, durch eine Relativbewegung des Beleuchtungsobjektivs vermieden ist.

Bei einer anderen Ausführung können der Fokus des Beleuchtungslichtbündels und/oder der Fokus des Abregungs- oder Schaltlichtbündels durch Verändern der Länge des optischen Lichtweges des Beleuchtungslichtbündels, nämlich durch Verändern der geometrischen Länge des Lichtweges und/oder durch Verändern eines Brechungsindex eines im Lichtweg angeordneten optischen Bauteils, bewegt werden.

Insbesondere kann eine Fokusschiebevorrichtung vorhanden und dazu ausgebildet und angeordnet sein, den Brechungsindex in einem Abschnitt des Lichtweges, in dem das Beleuchtungslicht konvergent oder divergent verläuft, zu verändern. Es ist auch möglich, dass eine Fokusschiebevorrichtung dazu ausgebildet und angeordnet ist, den geometrischen Lichtweg in einem Abschnitt des Lichtweges, in dem das Beleuchtungslicht konvergent oder divergent verläuft, zu verändern.

Hierzu kann eine Fokusschiebevorrichtung insbesondere dem Beleuchtungsobjektiv nachgeschaltet und/oder räumlich zwischen dem Beleuchtungsobjektiv und der Probe angeordnet sein. Eine solche Ausführung ist nicht auf den Bauraum innerhalb eines Mikroskopstatives angewiesen, sondern nutzt vorteilhaft den Freiraum vor dem Beleuchtungsobjektiv und damit den großen Arbeitsabstand der üblicherweise in der Lichtblattmikroskopie verwendeten Beleuchtungsobjektive. Insbesondere kann der weiter unten beschriebene Ring aus Blöcken oder das ringförmig ausgebildete Element vorteilhaft und platzsparend koaxial zu dem Beleuchtungsobjektiv, insbesondere vor der Frontlinse des Beleuchtungsobjektivs, angeordnet sein.

Eine Veränderung der Länge des Lichtwegs kann beispielsweise mittels eines aktiven Spiegels, der beispielsweise mit einem Piezoelement verschoben werden kann, erreicht werden. Alternativ oder zusätzlich ist auch die Verwendung eines akustooptischen Elements möglich. Als weitere Alternative ist es zur Veränderung des Lichtwegs auch möglich, wahlweise unterschiedliche optische Elemente mit unterschiedlicher Dicke und/oder unterschiedlicher optischer Dichte in den Strahlengang einzubringen. Es ist auch möglich, räumliche Lichtmodulatoren (SLM) oder Digital Mirror Devices (DMD) oder Deformable Mirrors (DM) zur Veränderung des Lichtweges zu verwenden.

Bei einer besonderen Ausführung werden zum Verändern der optischen Länge des Lichtweges des Beleuchtungslichtes, insbesondere motorisch gesteuert, sukzessive durchsichtige Blöcke unterschiedlicher Dicke und/oder mit unterschiedlichem Brechungsindex in den Lichtweg eingebracht. Dies kann beispielsweise in der Weise erfolgen, dass ein für ein erstes Schieben des Lichtblattfokusses bereits eingebrachter Block im Strahlengang verbleibt und dass für ein weiteres Schieben jeweils ein weiterer Block zusätzlich in den Strahlengang eingebracht wird.

Alternativ ist es insbesondere auch möglich, ein stufenweises Schieben des Beleuchtungslichtbündels und/oder der Fokus des Abregungs- oder Schaltlichtbündels in Axialrichtung dadurch zu realisieren, dass sukzessive und jeweils im Austausch gegeneinander durchsichtige Blöcke unterschiedlicher Dicke und/oder mit unterschiedlichem Brechungsindex in den Lichtweg eingebracht werden. Eine hierfür besonderes prädestiniertes Fokusschiebevorrichtung kann mehrere Blöcke unterschiedlicher Dicke und/oder mit unterschiedlichem Brechungsindex aufweisen.

Besonders präzise und schnell einstellbar ist eine hierzu ausgebildete Ausführung, bei der die Blöcke einen Bogen oder einen geschlossenen Ring bildend miteinander verbunden sind, wobei der Bogen oder der Ring zum Verändern der optischen Länge, insbesondere um die optische Achse oder um eine zur optischen Achse parallele Ache, gedreht wird. Auf diese Weise kann nämlich schnell der jeweils im Strahlengang befindliche Block gegen einen anderen Block ausgetauscht werden, wobei die Dicke und/oder der Brechungsindex des durchstrahlten Bereichs des Rings von der jeweiligen Drehstellung des Bogens oder des Rings abhängt. Vorzugsweise erfolgt das Drehen motorisch gesteuert.

Der Ring der Blöcke kann vorteilhaft insbesondere als Stufenring mit einer entlang einer Schraubenlinie ansteigenden Dicke der Blöcke, die nach einer 360-Grad-Drehung steil von dem dicksten Block auf den dünnsten Block abfällt, ausgebildet sein. Mit einer derartigen Ausführung kann der Fokus durch ein, insbesondere motorisch gesteuertes, Rotieren des Stufenrings vergleichsweise langsam in Lichtausbreitungsrichtung oder gegen die Lichtausbreitungsrichtung verschoben werden, wobei auf das langsame Schieben ein schneller Rücksprung erfolgt, bevor sich der Vorgang des langsamen Schiebens wiederholt.

Die Blöcke können als voneinander zerstörungsfrei separierbare Blöcke ausgebildet sein. Besonders robust und einfach handhabbar ist eine Ausführung, bei der die Blöcke unterschiedliche Bereiche eines einstückig hergestellten Körpers sind.

Alternativ zu den o.g. Ausführungen kann auch vorgesehen sein, dass ein von dem Beleuchtungslichtbündel und/oder dem Abregungs- oder Schaltlichtbündel durchleuchtetes Element mit einer entlang einer Bahn kontinuierlich ansteigenden Dicke und/oder kontinuierlich ansteigendem Brechungsindex zum Verändern der optischen Länge des Lichtweges relativ zum Strahlengang des Beleuchtungslichtbündels und/oder dem Abregungs- oder Schaltlichtbündels bewegt wird. Das Element kann insbesondere ringförmig ausgebildet und so drehbar gelagert sein, dass die Dicke und/oder der Brechungsindex des jeweils durchstrahlten Bereichs von der Drehstellung des Elements abhängt. Insbesondere kann das Element um die optische Achse oder um eine zur optischen Achse parallele Ache drehbar gelagert sein.

Bei einer weiteren Alternative werden zwei im Strahlangang des Beleuchtungslichtbündels und/oder dem Abregungs- oder Schaltlichtbündels angeordnete, durchsichtige Keilelemente zum Verändern der der optischen Länge des Lichtweges relativ zueinander, insbesondere motorische gesteuert, verschoben. Hierbei kann vorteilhaft insbesondere vorgesehen sein, dass eines der Keilelemente eine Eintrittsfläche und das andere der Keilelemente eine Austrittsfläche für das Beleuchtungslicht aufweist, wobei die Eintrittsfläche und die Austrittsfläche parallel zueinander angeordnet sind. Die Keilelemente können in einer Kontaktebene, insbesondere über eine Immersionsflüssigkeit, wie beispielsweise eine Ölimmersion, miteinander in Kontakt stehen. Eine solche Ausführung vermeidet einen Strahlversatz zwischen dem einfallenden und dem ausfallenden Beleuchtungslicht.

Bei einer besonders vorteilhaften Ausführung werden der Fokus des Beleuchtungslichtbündels und/oder der Fokus des Abregungs- oder Schaltlichtbündels durch Verändern der Länge des optischen Lichtweges des Beleuchtungslichtbündels oder des Abregungs- oder Schaltlichtbündels mittels einer Fokusschiebevorrichtung bewegt, die wenigstens einen Einstellarm aufweist, dessen optische Länge einstellbar ist.

Die Fokusschiebevorrichtung kann insbesondere einen Polarisationsstrahlteiler aufweisen, der das mittelbar oder unmittelbar von einer Beleuchtungsvorrichtung kommende, linearpolarisierte Beleuchtungslichtbündel in einen Einstellarm passieren lässt, der von einem Umlenkspiegel abgeschlossen ist und in dem eine Tubuslinse, eine λ/4-Platte sowie ein Objektiv angeordnet ist. Der senkrecht zur Ausbreitungsrichtung des Beleuchtungslichtbündels angeordnete Umlenkspiegel ist entlang der optischen Achse verschiebbar gehaltert. Der Umlenkspiegel reflektiert das Beleuchtungslichtbündel zurück, so dass dieses nach nochmaligem Durchlaufen des Objektivs, der λ/4-Platte sowie der Tubuslinse zurück zu dem Polarisationsstrahlteiler gelangt. Das an dem Polarisationsstrahlteiler wieder ankommende Beleuchtungslichtbündel weist aufgrund des zweimaligen Durchlaufens der entsprechend orientierten λ/4-Platte eine um 90 Grad gedrehte Linearpolarisationsrichtung auf und wird daher von dem Polarisationsstrahlteiler zu einer weiteren Tubuslinse, der das eigentliche Beleuchtungsobjektiv nachgeschaltet ist, reflektiert. Durch Verschieben des Umlenkspiegels kann die Lage des Fokus in der Beleuchtungsebene entlang der Ausbreitungsrichtung des Beleuchtungslichtbündels verschoben werden.

Bei einer besonders vorteilhaften anderen Ausführung sind die optische Achse des Beleuchtungsobjektivs und die optische Achse des Detektionsobjektivs zueinander parallel oder koaxial ausgerichtet, wobei dennoch vorzugsweise vorgesehen ist, dass die optische Achse des Detektionsobjektivs senkrecht zur Probenebene ausgerichtet ist, in der sich das die Probenlinie beleuchtende Beleuchtungslichtbündel ausbreitet. Alternativ oder zusätzlich kann auch vorgesehen sein, dass das Detektionsobjektiv und das Beleuchtungsobjektiv einander entgegengesetzt und einander gegenüberliegend ausgerichtet sind und/oder dass räumlich zischen dem Detektionsobjektiv und dem Beleuchtungsobjektiv ein Probenhalter angeordnet ist, der eine Untersuchungsposition für eine zu untersuchende Probe definiert. Eine solche Ausführung hat den besonderen Vorteil, dass das Lichtblatt-Mikroskop besonders kompakt und robust ausgeführt werden kann, und dass die Untersuchungsposition für die Probe besonders einfach zugänglich ist, so dass ein schnelles und präzises, sukzessives Verbringen der Proben in die Untersuchungsposition ermöglicht ist.

Eine solche Vorrichtung kann vorteilhaft ein Umlenkmittel aufweisen, das das Beleuchtungslichtbündel und/oder das Abregungs- oder Schaltlichtbündel, nachdem es das Beleuchtungsobjektiv durchlaufen hat, derart umlenkt, dass sie anschließend in der Probenebene verlaufen. Insbesondere kann das Umlenkmittel derart angeordnet sein, dass das umgelenkte Beleuchtungslichtbündel und/oder das Abregungs- oder Schaltlichtbündel einen von Null Grad verschiedenen Winkel zur optischen Achse des Beleuchtungsobjektivs und/oder des Detektionsobjektivs aufweist. Insbesondere kann die Beleuchtungs- und Probenebene senkrecht zur optischen Achse des Beleuchtungsobjektivs ausgerichtet sein.

Insbesondere kann vorteilhaft vorgesehen sein, dass das Beleuchtungslichtbündel und/oder das Abregungs- oder Schaltlichtbündel zunächst in vertikaler Richtung durch das Beleuchtungsobjektiv verlaufen und anschließend in horizontale Richtung mit der Umlenkeinrichtung umgelenkt wird, um die Probe in der Probenebene entlang der Probenlinie zu beleuchten.

Vorzugsweise verläuft das von dem beleuchteten Probenbereich ausgehende Detektionslicht, insbesondere Fluoreszenzlicht, in vertikaler Richtung durch ein Detektionsobjektiv. Ein solcher Aufbau ermöglicht die Verwendung von aufrechten oder inversen Standard-Mikroskopstativen zur Herstellung der erfindungsgemäßen Vorrichtung.

Bei einer ganz besonders vorteilhaften Ausführung ist vorgesehen, dass das Beleuchtungsobjektiv und die Umlenkeinrichtung, die beispielsweise einen oder mehrere Umlenkspiegel aufweisen kann, relativ zueinander beweglich angeordnet sind, um das Beleuchtungslichtbündel und/oder das Abregungs- oder Schaltlichtbündel relativ zur Probe bewegen zu können. Alternativ oder zusätzlich kann auch vorgesehen sein, dass die Umlenkeinrichtung, insbesondere beweglich, an dem Detektionsobjektiv befestigt ist.

Die erfindungsgemäße Vorrichtung kann vorteilhaft ein Rastermikroskop oder ein konfokales Rastermikroskop aufweisen und/oder durch Umrüsten eines ein Rastermikroskops oder eines konfokalen Rastermikroskops hergestellt sein. Hierbei bietet sich insbesondere die Verwendung eines inversen Mikroskopstatives an. Von besonderem Vorteil ist insoweit die Verwendung eines (möglicherweise in einem Labor ohnehin vorhandenen) Rastermikroskops zur Ausführung des erfindungsgemäßen Verfahrens.

In der Zeichnung ist der Erfindungsgegenstand beispielhaft und schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: eine schematische Darstellung eines Ausführungsbeispiels des erfindungsgemäßen Verfahrens an Hand einer Detailansicht eines Ausführungsbeispiels einer erfindungsgemäßen Vorrichtung,
- Fig. 2: schematisch die Ausleuchtung der Pupille des Beleuchtungsobjektivs zur Erzeugung eines Sectioned Bessel-Strahls mit einem Öffnungswinkel von 10 Grad,
- Fig. 3: einen Querschnitt durch einen Sectioned Bessel-Strahl für einen Öffnungswinkel von 10 Grad,
- Fig. 4: schematisch die Ausleuchtung der Pupille des Beleuchtungsobjektivs zur Erzeugung eines Sectioned Bessel-Strahls mit einem Öffnungswinkel von 50 Grad,
- Fig. 5: einen Querschnitt durch einen Sectioned Bessel-Strahl für einen Öffnungswinkel von 50 Grad,
- Fig. 6: schematisch die Ausleuchtung der Pupille des Beleuchtungsobjektivs zur Erzeugung eines Sectioned Bessel-Strahls mit einem Öffnungswinkel von 90 Grad,
- Fig. 7: einen Querschnitt durch einen Sectioned Bessel-Strahl für einen Öffnungswinkel von 90 Grad,
- Fig. 8: die Detektionswahrscheinlichkeit projiziert entlang der Beleuchtungsachse,
- Fig. 9: eine schematische Darstellung der Überlagerung eines gaußförmigen Beleuchtungslichtbündels mit einem Abregungs- oder Schaltlichtbündel, das zwei lateral versetzte Maxima aufweist,
- Fig. 10: eine schematische Darstellung der Überlagerung eines mehrere Maxima aufweisenden Beleuchtungslichtbündels mit einem mehrere Maxima aufweisenden Abregungs- oder Schaltlichtbündel,
- Fig. 11: eine schematische Darstellung der Überlagerung eines Beleuchtungslichtbündels mit einem Abregungs- oder Schaltlichtbündel, die beide als Bessel-Strahlen ausgebildet sind,
- Fig. 12: eine schematische Darstellung der Überlagerung eines Beleuchtungslichtbündels mit einem Abregungs- oder Schaltlichtbündel, die als gekreuzte sectioned Bessel-Strahlen ausgebildet sind,
- Fig. 13: eine schematische Darstellung der Überlagerung eines als gekreuzte sectioned Bessel-Strahl ausgebildeten Beleuchtungslichtbündels mit einem Abregungs- oder Schaltlichtbündel, das ein zentrales Minimum aufweist,
- Fig. 14 und 15: eine schematische Illustration einer konventionellen Detektion bei SPIM, wobei jedoch zur Beleuchtung vorteilhaft bereits ein Beleuchtungslichtbündel in Form eines Sectioned Bessel-Strahls verwendet wird,
- Fig. 16 und 17: ein schematisches Beispiel zur Illustration einer konfokalen Liniendetektion bei SPIM, wie sie bei der Durchführung eines erfindungsgemäßen Verfahrens eingesetzt werden kann,
- Fig. 18 und 19: ein weiteres schematisches Beispiel zur Illustration einer Detektion bei SPIM, wie sie bei der Durchführung eines erfindungsgemäßen Verfahrens eingesetzt werden kann,
- Fig. 20: eine schematische Illustration des Prinzips einer konfokalen Liniendetektion, wie sie zur Durchführung eines erfindungsgemäßen Verfahrens eingesetzt werden kann, bei der Beleuchtung einer Probenlinie mittels eines Beleuchtungslichtbündels, das einen langgezogenen Fokus aufweist.
- Fig. 21: eine schematische Illustration des Prinzips einer konfokalen Liniendetektion, wie sie zur Durchführung eines erfindungsgemäßen Verfahrens eingesetzt werden kann, bei der Beleuchtung einer Probenlinie mittels eines Beleuchtungslichtbündels, das einen kurzen Fokus aufweist, der während der Detektion in Richtung der Lichtausbreitungsrichtung vor und/oder zurück verschoben wird,
- Fig. 22: eine schematische Darstellung der Detektion bei einer Beleuchtung mit langgezogenen Fokus,
- Fig. 23: eine schematische Darstellung der Detektion bei einer Beleuchtung mit kurzem Fokus,
- Fig. 24: eine schematische Darstellung der Detektion bei einer Beleuchtung mit kurzem, jedoch lateral besonders breitem Fokus,
- Fig. 25 bis 27: eine schematische Darstellung der Intensitätsverteilungen des Anregungslichts und der Abregungs- oder Schaltlichts und der resultierenden Fluoreszenz in einem Querschnitt entlang der Lichtausbreitungsrichtung zur Erläuterung der Erfindung,
- Fig. 28: eine schematische Darstellung der Intensitätsverteilungen des Anregungslichts und der Abregungs- oder Schaltlichts in einem Querschnitt senkrecht zur Lichtausbreitungsrichtung vor dem Fokus,
- Fig. 29: eine schematische Darstellung der Intensitätsverteilungen des Anregungslichts und der Abregungs- oder Schaltlichts in einem Querschnitt senkrecht zur Lichtausbreitungsrichtung im Fokus,
- Fig. 30: eine schematische Darstellung der Intensitätsverteilungen des Anregungslichts und der Abregungs- oder Schaltlichts in einem Querschnitt senkrecht zur Lichtausbreitungsrichtung nach dem Fokus,
- Fig. 31: eine schematische Darstellung eines Transversalquerschnitts der Überlagerung eines Beleuchtungslichtbündels mit einen Abregungs- oder Schaltlichtbündel nach dem Stand der Technik (STED-SPIM),
- Fig. 32: eine schematische Darstellung der STED-Effizienz bei unterschiedlichen Positionen nämlich vor dem Ort des minimalen Strahlradius (z<0).
- Fig. 33: eine Illustration der Intensitätsverteilung von Beleuchtungslichtbündel und Abregungs- oder Schaltlichtbündel am Ort des minimalen Strahlradius (z=0),
- Fig. 34: eine Illustration der Intensitätsverteilung von Beleuchtungslichtbündel und Abregungs- oder Schaltlichtbündel nach dem Ort des minimalen Strahlradius (z>0),
- Fig. 35: eine schematische Illustration der Beleuchtung bei einem Beispiel einer erfindungsgemäßen Ausführung,
- Fig. 36: schematisch eine grafische Darstellung des Ansteuersignals zum Verschieben des Überlappungsbereichs, wobei die Position des Beleuchtungslichtbündels zusätzlich dem Verschieben moduliert wird,
- Fig. 37 und 38: eine Illustration der räumlichen Positionsänderung des Beleuchtungslichtbündels auf Grund des zusätzlichen Modulierens.

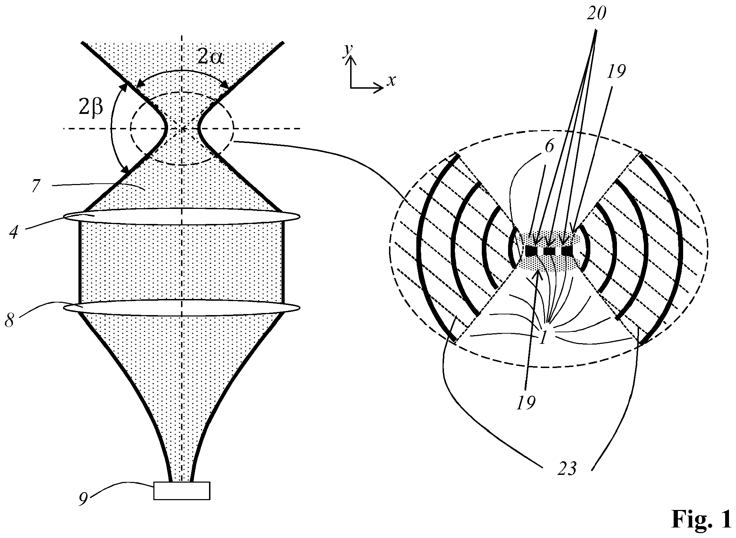

Fig. 1 zeigt eine schematische Darstellung eines Ausführungsbeispiels des erfindungsgemäßen Verfahrens an Hand einer Detailansicht eines Ausführungsbeispiels einer erfindungsgemäßen Vorrichtung.

Die Vorrichtung beinhaltet wenigstens eine Lichtquelle (nicht dargestellt) zum Erzeugen eines Beleuchtungslichtbündels 1, das wenigstens eine zur Fluoreszenzanregung der Probe geeignete Wellenlänge aufweist, und zum Erzeugen eines Abregungs- oder Schaltlichtbündels 6, das wenigstens eine zur Abregung der Probe geeignete Wellenlänge aufweist. Die Vorrichtung beinhaltet außerdem ein Beleuchtungsobjektiv 2 (in dieser Figur nicht dargestellt) zum Fokussieren des Beleuchtungslichtbündels 1 und des Abregungs- oder Schaltlichtbündels 6.

Das Beleuchtungslichtbündel 1 und das Abregungs- oder Schaltlichtbündel 6 sind derart geführt, dass eine zu untersuchende Probe in einer Probenebene (bezogen auf Figur 1 ist die Probenebene horizontal und senkrecht zur Zeichenebene ausgerichtet) entlang einer Probenlinie (bezogen auf Figur 1 steht die Probenlinie senkrecht zur Zeichenebene) mit dem sich entlang der Probenlinie ausbreitenden Beleuchtungslichtbündel 1 beleuchtet ist und das Abregungs- oder Schaltlichtbündel 6 in der Probenebene wenigstens teilweise räumlich mit dem Beleuchtungslichtbündel 1 überlappt. Bezogen auf Figur 1 stehen die Ausbreitungsrichtung des Beleuchtungslichtbündels 1 und des Abregungs- oder Schaltlichtbündel 6 senkrecht zur Zeichenebene.

Die Vorrichtung beinhaltet außerdem eine Detektionsoptik, die ein Detektionsobjektiv 4 und eine Tubuslinse 8 beinhaltet und die von dem mittels des Beleuchtungslichtbündels 1 entlang der Probenlinie beleuchteten Probenbereich ausgehendes Detektionslicht 7 in eine Detektionsebene abbildet, in der ein Spaltdetektor 9 für eine konfokale Liniendetektion angeordnet ist.

Der Spaltdetektor 9 kann insbesondere durch den jeweils aktiv geschalteten Teil eines in der Detektionsebene angeordneten Flächendetektors gebildet sein. Der Flächendetektor kann beispielsweise ein CMOS-Detektor oder sCMOS-Detektor sein. Hierbei wird lediglich ein Teil des Flächendetektors, nämlich der Teil, der gerade dem Spaltdetektor 9 entspricht, ausgelesen (aktiv geschalteter Teil), während die übrigen Teile des Flächendetektors, nämlich die Teile, die außerhalb des Spaltdetektors liegen, nicht ausgelesen werden (nicht aktiv geschalteter Teil).

In einem ersten Unterbereich 19, in dem die Wahrscheinlichkeit einer Wechselwirkung der Probenmoleküle mit dem Abregungs- oder Schaltlichtbündel (6) größer als 90%, insbesondere größer 95%, ganz insbesondere größer 99%, ist, wird die Fluoreszenz wirkungsvoll unterdrückt, so dass das von dem zentralen, eigentlich interessierenden zweiten Unterbereich 20, der von dem ersten Unterbereich 19 abschnittweise umgeben ist, ausgehende Fluoreszenzlicht nicht mit unerwünschten Fluoreszenzlicht aus diesem ersten Unterbereich 19 überlagert ist. Außerhalb des ersten Unterbereichs 19 reicht die Intensität des Abregungs- oder Schaltlichtbündels 6 jedoch nicht aus, eine störende Fluoreszenz wirkungsvoll und zuverlässig zu unterdrücken. Aus diesem Grund wird von dem Spaltdetektor das aus den in Figur 1 mit gestrichelten Linien schraffiert markierten Bereichen (23) entstammende Licht ausgeblendet und nicht detektiert.

Um wenigstens einen Teil der Probenebene, die die Beleuchtungsebene darstellt, Probenlinie für Probenlinie sukzessive abzutasten, wird das Beleuchtungslichtbündel 1 in der Probenebene senkrecht zu seiner Ausbreitungsrichtung verschoben. Bezogen auf die Figur 1 erfolgt das Verschieben in horizontaler Richtung. Das Abregungs- oder Schaltlichtbündel 6 wird hierbei synchron zu dem Beleuchtungslichtbündel 1 mitverschoben. Zu diesem Zweck beinhaltet die Vorrichtung wenigstens eine hinsichtlich des Ablenkwinkels einstellbare Beleuchtungs-Strahlablenkeinrichtung (nicht dargestellt) im Strahlengang des Beleuchtungslichtbündels 1 und des Abregungs- oder Schaltlichtbündels 6.

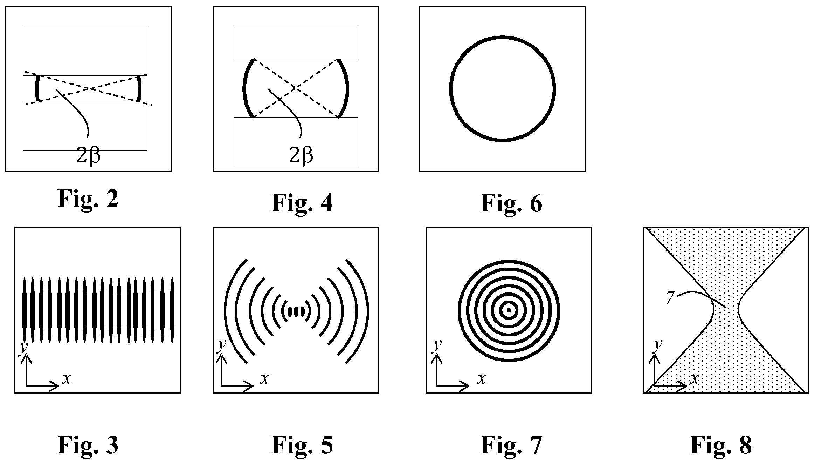

Das Beleuchtungslichtbündel 1 ist als sectioned Bessel-Strahl ausgebildet. Das Abregungs- oder Schaltlichtbündel 6 weist im Transversalquerschnitt zwei Maxima auf. Werden sectioned Bessel-Strahlen (siehe insbesondere die Figuren 2 bis 4) zur Beleuchtung verwendet, kann die jeweils detektierte Probenlinie vor allem von der Seite beleuchtet werden. Dadurch ist ein Überlapp zwischen Detektions- und Anregungs-PSF vorteilhaft bereits stark minimiert und das optical sectioning und die axiale Auflösung sind unabhängig von der Größe des Bildfeldes. Dies lässt sich insbesondere dadurch erreichen, dass die optische Achse des Detektionsobjektivs senkrecht zur Beleuchtungs- und Probenebene ausgerichtet ist.

Eine Grundidee der vorliegenden Erfindung besteht in der Kombination von STED/Resolft-SPIM mit dem Ausblenden unerwünschten Fluoreszenzlichtes, beispielsweise durch konfokale Liniendetektion; dies vorteilhaft insbesondere bei gleichzeitiger Verwendung von sectioned Bessel-Strahlen. Hierdurch wird die Zahl der abzuregenden Fluorophore vorteilhaft minimiert, indem zusätzlich zu STED noch eine weitere Technik verwendet wird, die weniger Leistung erfordert.

Eine alleinige konfokale Liniendetektion bei einer Beleuchtung mit einem sectioned Bessel-Strahl besitzt für sich alleine gesehen die Limitierung, dass das Hauptmaximum eines sectioned Bessel-Strahls entlang der optischen Achse notwendiger Weise elongiert ist und so die erreichbare Auflösung schlechter sein kann, als mit gewöhnlichen Bessel-Strahlen (auch wenn das optical sectioning wesentlich besser ist). Das zentrale Maximum eines sectioned Bessel-Strahls ist unabhängig von der Schärfentiefe des Strahls und lässt sich daher ohne weiteres so wählen, dass es kleiner ist als 2,4 µm. Jedoch kann es nicht kleiner als ca. 0,6 µm für eine nummerische Apertur von NA=0,4 gemacht werden (gegenüber einer nummerischen Apertur von 0,4 µm für konventionelle Bessel-Strahlen), ohne durch die Erhöhung des Öffnungswinkels β den Überlapp des Ring-Systems des Bessel-Strahls mit der Detektions-PSF zu erhöhen und dadurch den Bildkontrast zu verschlechtern.

Die Figuren 3, 5 und 7 illustrieren jeweils einen Querschnitt durch einen sectioned Bessel-Strahl, wie er zur Ausführung eines erfindungsgemäßen Verfahrens als Beleuchtungslichtbündel 1 verwendet werden kann, für unterschiedliche Öffnungswinkel. Fig. 3 zeigt einen Querschnitt durch einen sectioned Bessel-Strahl für einen Öffnungswinkel von 10 Grad, Fig. 5 für einen Öffnungswinkel von 50 Grad und Fig. 7 für einen Öffnungswinkel von 90 Grad. Fig. 8 illustriert die Detektionswahrscheinlichkeit projiziert entlang der Beleuchtungsachse.

Figur 2 zeigt schematisch die Ausleuchtung der Pupille des Beleuchtungsobjektivs zur Erzeugung eines Sectioned Bessel-Strahls mit einem Öffnungswinkel von 10 Grad. Die resultierende Intensitätsverteilung in der Fokalebene zeigt Fig. 3. Figur 4 zeigt schematisch die Ausleuchtung der Pupille des Beleuchtungsobjektivs zur Erzeugung eines Sectioned Bessel-Strahls mit einem Öffnungswinkel von 50 Grad. Die resultierende Intensitätsverteilung in der Fokalebene zeigt Fig. 5. Figur 6 zeigt schematisch die Ausleuchtung der Pupille des Beleuchtungsobjektivs zur Erzeugung eines Sectioned Bessel-Strahls mit einem Öffnungswinkel von 90 Grad. Die resultierende Intensitätsverteilung in der Fokalebene zeigt Fig. 7.

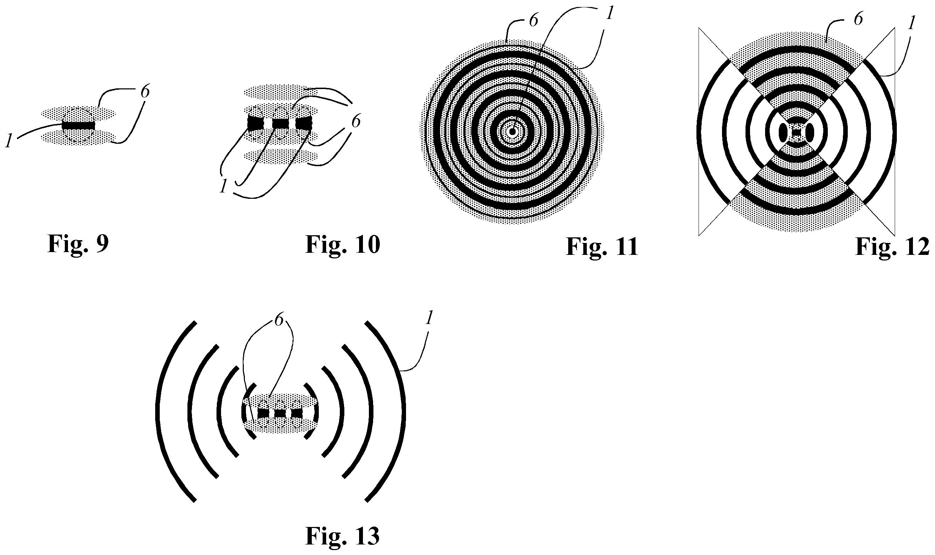

Die Figuren 9 bis 13 zeigen jeweils eine schematische Darstellung der Überlagerung eines Beleuchtungslichtbündels 1 mit einem Abregungs- oder Schaltlichtbündel 6, wie sie zur Ausführung eines erfindungsgemäßen Verfahrens eingesetzt werden können.

Figur 9 zeigt in einem Lateralquerschnitt eine schematische Darstellung einer möglichen Überlagerung eines gaußförmigen Beleuchtungslichtbündels 1 mit einem Abregungs- oder Schaltlichtbündel 6, das zwei lateral versetzte Maxima aufweist.

Figur 10 zeigt in einem Lateralquerschnitt eine schematische Darstellung einer möglichen Überlagerung eines Beleuchtungslichtbündels 1, das mehrere nebeneinander liegende Maxima (in der Figur horizontal nebeneinander) aufweist, mit einem Abregungs- oder Schaltlichtbündel 6, das ebenfalls mehrere voneinander beabstandete Maxima (in der Figur vertikal übereinander) aufweist.

Figur 11 zeigt in einem Lateralquerschnitt eine schematische Darstellung einer möglichen Überlagerung eines Beleuchtungslichtbündels 1, das als Bessel-Strahl ausgebildet ist mit einem Abregungs- oder Schaltlichtbündel, das ebenfalls als Bessel-Strahl ausgebildet ist.

Figur 12 zeigt in einem Lateralquerschnitt schematische Darstellung einer möglichen Überlagerung eines Beleuchtungslichtbündels 1 mit einem Abregungs- oder Schaltlichtbündel 6, die beide als gekreuzte sectioned Bessel-Strahlen oder Mathieu-Strahlen ausgebildet sind.

Figur 13 zeigt eine schematische Darstellung der Überlagerung eines als gekreuzte sectioned Bessel-Strahl ausgebildeten Beleuchtungslichtbündels mit einem Abregungs- oder Schaltlichtbündel, das ein zentrales Minimum aufweist.

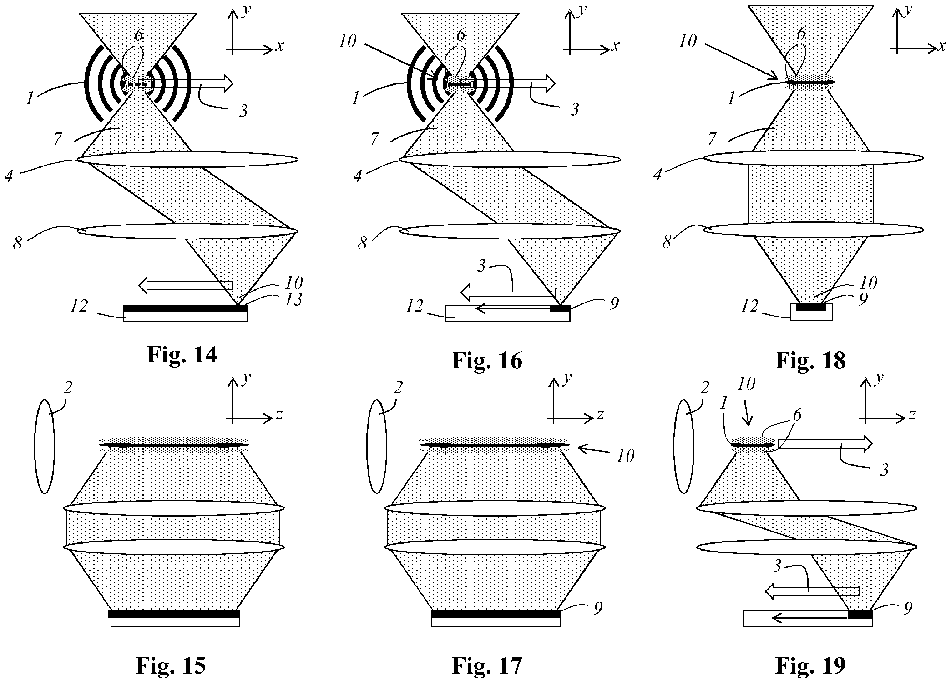

Die Figuren 14 und 15 zeigen eine schematische Illustration einer konventionellen Detektion bei SPIM, wobei Figur 14 die Verhältnisse in der x-y-Ebene zeigt, während Figur 15 die Verhältnisse in der y-z-Ebene zeigt, wobei jedoch zur Beleuchtung vorteilhaft bereits ein Beleuchtungslichtbündel in Form eines Sectioned Bessel-Strahls verwendet wird.

Das Beleuchtungslichtbündel 1 wird mittels eines Beleuchtungsobjektivs 2 fokussiert, um eine Probenlinie, die in der x-z-Ebene liegt, zu beleuchten. Die Ausbreitungsrichtung des Beleuchtungslichtbündels 1 verläuft entlang der Probenlinie. Um eine in der x-z-Ebene liegende Probenebene abzutasten, wird das Beleuchtungslichtbündel 1 in der x-z-Ebene verschoben und die Probenebene so Probenlinie für Probenlinie sukzessive abgetastet. Das von der Probe (nicht eingezeichnet) ausgehende Detektionslicht 7 wird mittels eines Detektionsobjektivs 4, dessen optische Achse senkrecht zur Probenebene ausgerichtet ist gesammelt und in eine Detektionsebene 5 abgebildet.

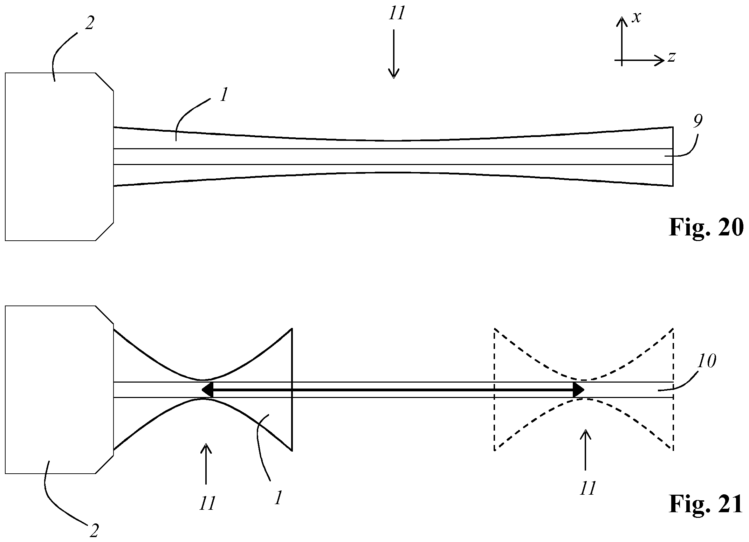

Die Figuren 14 und 15 zeigen eine schematische Illustration einer konfokalen Liniendetektion bei SPIM, wie sie bei der Durchführung eines erfindungsgemäßen Verfahrens eingesetzt werden kann. Es wird bereits eine verbesserte Auflösung erreicht, weil jeweils nur der Bereich detektiert wird, in dem das Beleuchtungslichtbündel die beste axiale Auflösung (Separierbarkeit von zwei Pumpen entlang der optischen Achse) und das beste optical sectioning (optische Schnittdicke, also die Breite des Bereichs um die Fokusebene, aus dem ein Großteil der Fluoreszenz detektiert wird) bietet. Durch die zusätzliche Überlagerung des Abregungs- oder Schaltlichtbündels 6 wird erfindungsgemäß eine zusätzliche Auflösungs- und Kontraststeigerung erreicht, was weiter unten, insbesondere unter Bezugnahme auf Fig. 20, im Detail erläutert ist.

Die Figuren 16 und 17 illustrieren schematisch das Prinzip einer konfokalen Liniendetektion bei der Beleuchtung entlang einer Probenlinie, wie sie zur Durchführung eines erfindungsgemäßen Verfahrens eingesetzt werden kann. Die Beleuchtung erfolgt mit einem Beleuchtungslichtbündel 1, das einen langgezogenen Fokus 11 aufweist. Aus dem mittels des Beleuchtungslichtbündels 1 beleuchteten Probenbereich wird lediglich der Teil an Detektionslicht detektiert, der aus einem Detektionsbereich 10 emittiert wird, der durch die Breite und die Position des in der zur Probenebene optisch korrespondierenden Detektionsebene angeordneten Spaltdetektors 9 definiert ist.

Der Detektionsbereich 10 ist so groß gewählt und derart ausgerichtet und angeordnet, dass er sowohl einen ersten Unterbereich 19 (in den Figuren 16 und 17 nicht eingezeichnet), in dem die Wahrscheinlichkeit einer Wechselwirkung der Probenmoleküle mit dem Abregungs- oder Schaltlichtbündel 6 größer als 90%, insbesondere größer 95%, ganz insbesondere größer 99%, ist, als auch einen zweiten Unterbereich 20 (in den Figuren 16 und 17 nicht eingezeichnet), der von dem ersten Unterbereich 19 wenigstens abschnittweise umgeben ist und/oder in dem das Abregungs- oder Schaltlichtbündel 6 eine Nullstelle aufweist, beinhaltet.

Die Spaltbreitenrichtung (bezogen auf die Figur horizontal in der Zeichenebene) des Spaltdetektors 9 ist parallel zur Längserstreckungsrichtung der Abbildung der Probenlinie in die Detektionsebene ausgerichtet. Detektionslicht, das von Probenbereichen ausgeht, die außerhalb des durch den verwendeten Spaltdetektor 9 definierten Detektionsbereichs 10 liegen, werden von dem Spaltdetektor 9 nicht detektiert, so dass störendes Fluoreszenzlicht, das aus Bereichen stammt, in denen eine Unterdrückung durch das Abregungs- oder Schaltlichtbündel 6 nur unzureichend möglich ist, wenigstens zu einem erheblichen Teil nicht detektiert wird. Bei der in den Figuren 16 und 17 gezeigten Ausführung erfolgt ein laterales Ausblenden von unerwünschtem Fluoreszenzlicht.

Bei diesem Beispiel ist der Spaltdetektor 9 Teil eines Flächendetektors 12. Konkret ist der Spaltdetektor 12 durch den jeweils aktiv geschalteten Teil des in der Detektionsebene angeordneten Flächendetektors 12 gebildet. Der Flächendetektor kann beispielsweise ein CMOS-Detektor oder sCMOS-Detektor sein. Es wird jeweils lediglich der Teil des Flächendetektors 12, der gerade dem Spaltdetektor entspricht, ausgelesen (aktiv geschalteter Teil), während die übrigen Teile des Flächendetektors, nämlich die Teile, die außerhalb des Spaltdetektors 9 liegen, nicht ausgelesen werden (nicht aktiv geschalteter Teil). Vorzugsweise wird wenigstens ein Teil der Probenebene durch Verschieben des Überlappungsbereichs sukzessive abgetastet. Durch Verschieben des Überlappungsbereichs von Beleuchtungslichtbündel 1 und Abregungs- oder Schaltlichtbündel 6 senkrecht zur Lichtausbreitungsrichtung wird der interessierende Probenbereich in der Probenebene sukzessive abgetastet. Die dabei ausgeführten Bewegungen des Beleuchtungslichtbündels 1 und des Abregungs- oder Schaltlichtbündels 6 sind durch die Pfeile 3 angedeutet.

Die Figuren 18 und 19 illustrieren schematisch ein anders Ausführungsbeispiel der Erfindung. Bei diesem Ausführungsbeispiel wird wenigstens ein Teil der Probenebene sukzessive abgetastet, indem ein, insbesondere vergleichsweise kurzer, Fokus des Beleuchtungslichtbündels 1 zusammen mit dem Fokus des Abregungs- oder Schaltlichtbündels 6 in Lichtausbreitungsrichtung, also entlang der Probenlinie, verschoben wird.

Auch bei dieser Ausführung wird aus einem mittels des Beleuchtungslichtbündels 1 beleuchteten Probenbereich lediglich der Teil an Fluoreszenzlicht detektiert, der aus einem bestimmten Detektionsbereich 10 stammt, wobei der Detektionsbereich 10 durch die Breite und die Position eines in der zur Probenebene optisch korrespondierenden Detektionsebene angeordneten Spaltdetektors 9 definiert ist.

Auch bei dieser Ausführung ist der Detektionsbereich 10 so groß gewählt und derart ausgerichtet und angeordnet, dass er sowohl einen ersten Unterbereich 19 (in den Figuren 18 und 19 nicht eingezeichnet), in dem die Wahrscheinlichkeit einer Wechselwirkung der Probenmoleküle mit dem Abregungs- oder Schaltlichtbündel 6 größer als 90%, insbesondere größer 95%, ganz insbesondere größer 99%, ist, als auch einen zweiten Unterbereich 20 (in den Figuren 18 und 19 nicht eingezeichnet), der von dem ersten Unterbereich 19 wenigstens abschnittweise umgeben ist und/oder in dem das Abregungs- oder Schaltlichtbündel 6 eine Nullstelle aufweist, beinhaltet.

Bei dieser Ausführung ist der Detektor als Spaltdetektor 9 auf der Basis eines Flächendetektors 12 ausgebildet, wobei die Spaltbreitenrichtung parallel zur Längserstreckungsrichtung der Abbildung der Probenlinie in die Detektionsebene ausgerichtet ist. Auf diese Weise wird ein axiales Ausblenden von unerwünschtem Fluoreszenzlicht erreicht.

Sobald auf diese Weise der zu untersuchende Teil der Probenebene entlang einer Probenlinie durchlaufen wurde, kann der Vorgang jeweils entlang der jeweils benachbarte Probenlinie fortlaufend wiederholt werden, bis der zu untersuchende Teil der Probenebene in zwei Dimensionen abgetastet ist.

Fig. 20 illustriert schematisch das Prinzip einer konfokalen Liniendetektion bei der Beleuchtung einer Probenlinie, wie sie zur Durchführung eines erfindungsgemäßen Verfahrens eingesetzt werden kann. Die Beleuchtung erfolgt mit einem Beleuchtungslichtbündel 1, das einen langgezogenen Fokus 11 aufweist. Aus dem mittels des Beleuchtungslichtbündels 1 beleuchteten Probenbereich wird lediglich der Teil an Detektionslicht detektiert, der aus dem Detektionsbereichs 10 emittiert wird, der durch die Breite und die Position des in der Zur Probenebene optisch korrespondierenden Detektionsebene angeordneten Spaltdetektors 9 (in dieser Figur nicht eingezeichnet) definiert ist. Detektionslicht, das von Probenbereichen ausgeht, die außerhalb des durch den verwendeten Spaltdetektor 9 definierten Detektionsbereichs 10 liegen, werden von dem Spaltdetektor 9 nicht detektiert.

Fig. 21 zeigt eine schematische Illustration des Prinzips einer konfokalen Liniendetektion, wie sie zur Durchführung eines erfindungsgemäßen Verfahrens eingesetzt werden kann, wobei eine Probenlinie mittels eines Beleuchtungslichtbündels 1 beleuchtet wird, das einen kurzen Fokus 11 aufweist. Der Fokus 11 wird während der Detektion in Richtung der Lichtausbreitungsrichtung vor und/oder zurück verschoben. Diese Ausführung erlaubt es, die Probenlinie sukzessive, insbesondere kontinuierlich, mit dem radial räumlich sehr schmalen Fokus 11 des Beleuchtungslichtbündels 1, dem ein entsprechend schmaler Fokus des Abregungs- oder Schaltlichtbündels 6 überlagert wird (in dieser Figur der besseren Übersichtlichkeit halber nicht eingezeichnet), abzuscannen, wodurch eine noch weiter gesteigerte Auflösung erzielbar ist. Hierbei wird vorteilhaft ausgenutzt, dass der Fokus 11 einen wesentlich geringen Strahldurchmesser in der Strahltaille (Ort des geringsten Durchmessers) aufweisen kann, als der Fokus 11 bei der Ausführung gemäß Fig. 12.

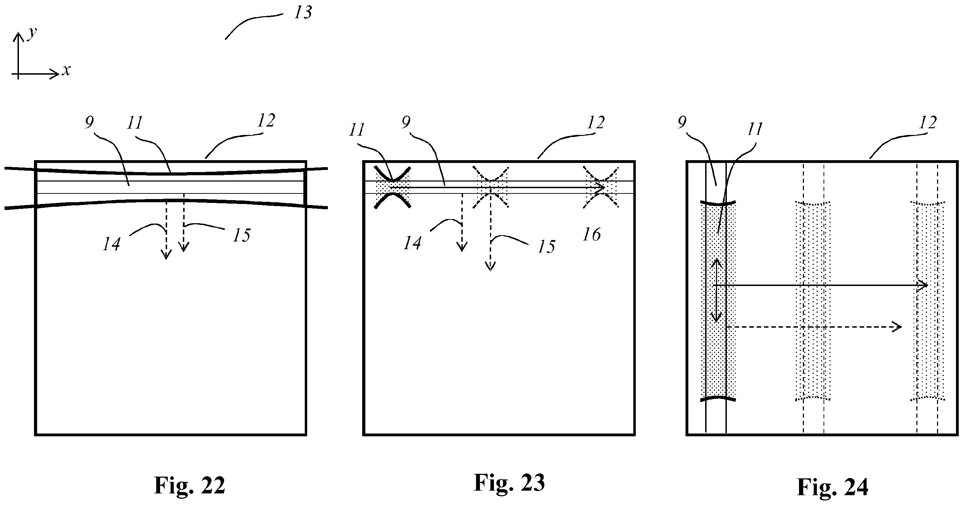

Fig. 22 zeigt eine schematische Darstellung der Detektion bei einer Beleuchtung mit einem Beleuchtungslichtbündel 1 mit langgezogenem Fokus 11, wie sie oben unter Bezugnahme auf Figur 12 beschrieben ist.

Die (in Figur 14 nicht dargestellte) Detektionsoptik bildet das von dem beleuchteten Bereich ausgehende Detektionslicht 7 in eine Detektionsebene (bezogen auf Figur 14: die Zeichenebene) ab, in der ein Flächendetektor 12 angeordnet ist. Im Bereich der Abbildung 13 des beleuchteten Probenbereichs ist ein Spaltdetektor 9 angeordnet, der durch den jeweils aktiv geschalteten Teil eines Flächendetektors 12 gebildet ist. Die Spaltbreitenrichtung des Spaltdetektors 9 ist senkrecht zur Längserstreckungsrichtung der Abbildung 13 des beleuchteten Probenbereichs ausgerichtet.

Um wenigstens einen flächigen Teil der Probenebene Probenlinie für Probenlinie sukzessive abzutasten, wird das Beleuchtungslichtbündel 1 in der Probenebene senkrecht zu seiner Ausbreitungsrichtung und gemeinsam mit dem Abregungs- oder Schaltlichtbündel 6 verschoben. Entsprechend verschiebt sich die Abbildung 13 des beleuchteten Probenbereichs in der Detektionsebene, was durch den Pfeil 14 illustriert ist. Der Spaltdetektor 9 wird durch geeignetes Aktiv-Schalten und Inaktiv-Schalten der Pixel des Flächendetektors 12 synchron mit bewegt, was durch den Pfeil 15 illustriert ist.

Fig. 23 zeigt eine schematische Darstellung der Detektion bei einer Beleuchtung mit einem Beleuchtungslichtbündel 1 mit kurzem Fokus 11, wie sie oben unter Bezugnahme auf die Figuren 18 und 19 beschrieben ist. Entsprechend der axialen Verschiebung des Fokus 11 des Beleuchtungslichtbündels 1 (in Figur 15 nicht dargestellt) verschiebt sich die Abbildung des mit dem Fokus 11 beleuchteten Probenbereichs entlang der Längserstreckungsrichtung des Spaltdetektors 9, was durch den Doppelpfeil 16 illustriert ist. Bei dieser Ausführung ist der Detektor vorzugsweise als Spaltdetektor 9 ausgebildet, wobei die Spaltbreitenrichtung parallel zur Längserstreckungsrichtung der Abbildung der Probenlinie in die Detektionsebene ausgerichtet ist. Auf diese Weise wird ein axiales Ausblenden des unerwünschten Fluoreszenzlichtes erreicht. Sobald auf diese Weise der zu untersuchende Teil der Probenebene entlang einer Probenlinie durchlaufen wurde, kann der Vorgang jeweils entlang der jeweils benachbarte Probenlinie fortlaufend wiederholt werden, bis der zu untersuchende Teil der Probenebene in zwei Dimensionen abgetastet ist. Das Verschieben des Beleuchtungslichtbündels 1 und des Abregungs- oder Schaltlichtbündels 6 zu den nächsten Probenlinien ist durch die Pfeile 14 und 15 angedeutet.

Fig. 24 zeigt eine schematische Darstellung der Detektion bei einer Beleuchtung mit einem Beleuchtungslichtbündel 1 mit kurzem, aber lateral sehr ausgedehntem Fokus 11 des Beleuchtungslichtbündels 1 und des Abregungs- oder Schaltlichtbündels 6. Bei dieser Ausführung kann der in der Probenebene liegende, interessierende Bereich der Probe durch einen einzigen Scan entlang der Probenline abgetastet werden. Auch bei dieser Ausführung ist der Detektor vorzugsweise als Spaltdetektor 9 ausgebildet, wobei die Spaltbreitenrichtung parallel zur Längserstreckungsrichtung der Abbildung der Probenlinie in die Detektionsebene ausgerichtet ist.

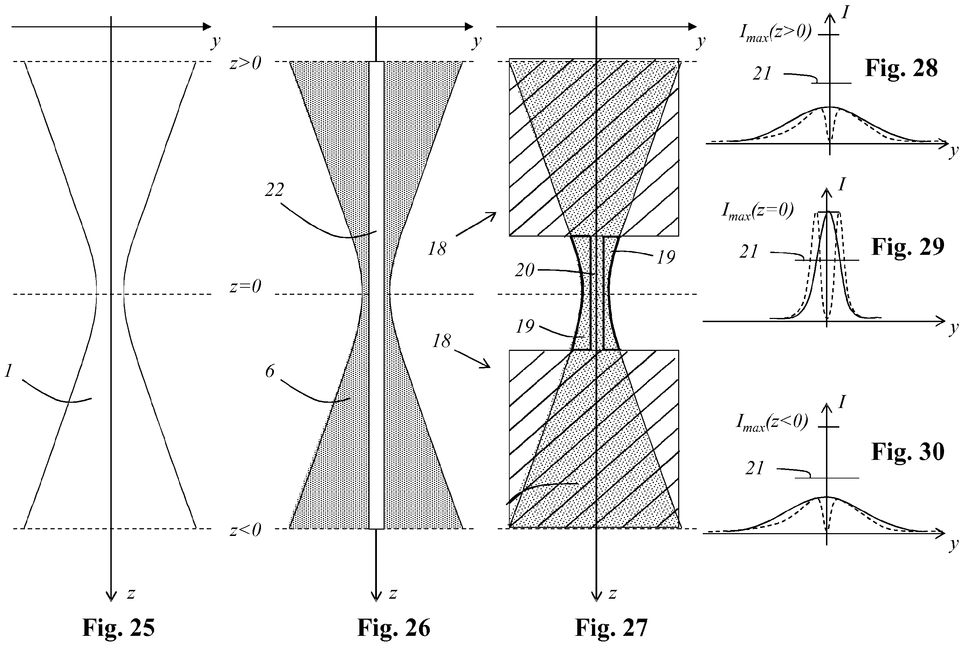

Die Figuren 25 bis 27 zeigen eine schematische Darstellung der Intensitätsverteilungen des Angregungslichtbündels 1 (Figur 25) und der Abregungs- oder Schaltlichtbündels 6 (Figur 26), das entlang der optischen Achse (z-Achse) eine Nullstelle 22 aufweist, und der Intensitätsverteilung der resultierenden Fluoreszenz (Figur 27) zur Erläuterung einer möglichen Ausführung der Erfindung.

In den (schraffiert eingezeichneten) Bereichen 18 vor und hinter der Strahltaille findet keine wirksame Fluoreszenzunterdrückung durch STED statt, weil die Lichtleistungsdichte zu gering ist. Eine wirksame Fluoreszenzunterdrückung durch STED findet nur in dem ersten Unterbereich 19 statt.

Um zu vermeiden, dass unerwünschtes Fluoreszenzlicht gemeinsam mit dem eigentlich zu detektierenden, aus einem zweiten Unterbereich 20 stammende Fluoreszenzlicht detektiert wird, wird das von den Bereichen 18 vor und hinter der Strahltaille ausgehende Fluoreszenzlicht ausgeblendet und nicht detektiert.

Es wird vielmehr lediglich der Teil des von der Probenebene ausgehenden Fluoreszenzlichts als Detektionslicht detektiert, der aus einem ersten Unterbereich 19 und aus einem zweiten Unterbereich 20, der von dem ersten Unterbereich 19 wenigstens abschnittweise umgeben ist, detektiert, wobei eine Fluoreszenz aus dem ersten Unterbereich 19 auf Grund der hohen Leistungsdichte des Abregungs- oder Schaltlichtbündels 6 nahezu vollständig unterdrückt wird. Das in Axialrichtung gesehen von außerhalb des ersten Unterbereichs 19 und des zweiten Unterbereichs 20 stammende Fluoreszenzlicht wird, beispielsweise mit einem Spaltdetektor, ausgeblendet. Bei der in Figur 27 gezeigten Ausführung erfolgt demnach ein axiales Ausblenden von unerwünschtem Fluoreszenzlicht.

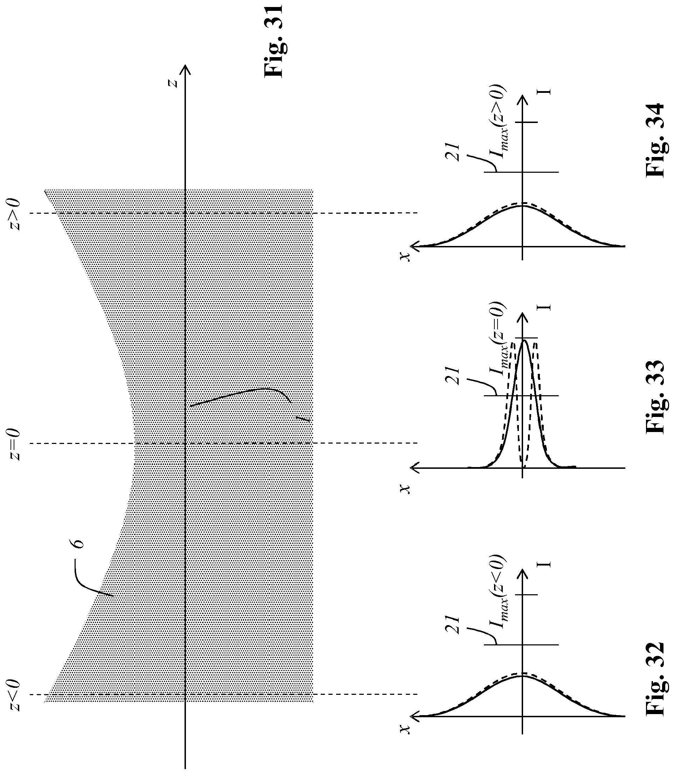

Figur 31 zeigt eine schematische Darstellung eines Transversalquerschnitts der Überlagerung eines Beleuchtungslichtbündels 1 mit einen Abregungs- oder Schaltlichtbündel 6 nach dem Stand der Technik (STED-SPIM). Die Figuren 32 bis 34 zeigen eine schematische Darstellung der STED-Effizienz bei unterschiedlichen Positionen nämlich vor dem Ort des minimalen Strahlradius (z<0) (Figur 32), am Ort des minimalen Strahlradius (z=0) (Figur 33) und nach dem Ort des minimalen Strahlradius (z>0) (Figur 34).

Die Figuren 28 bis 30 sowie 31 bis 34 illustrieren, dass für eine Untersuchung einer Probe mittels einer Kombination von STED und SPIM - für sich alleine gesehen - bei einer gaußförmigen Beleuchtung und vor allem bei einer Beleuchtung mit Bessel-Strahlen nachteiliger Weise extrem hohe Leistungen des Abregungsstrahls notwendig sind, um einen für eine wirkungsvolle Abregung mindestens zu erreichenden Intensitätsschwellwert 21 zu überschreiten.

Insbesondere das Ringsystem lässt sich nachteiliger Weise durch einen STED-Strahl nur sehr schwer abregen, da die Intensität im Abregungsstrahl nicht ausreicht. Dies liegt daran, dass der Anregungsstrahl einen durch die Beugung begrenzten Querschnitt hat, die mit der Schärfentiefe des Anregungsstrahls skaliert. Für Gauß-Strahlen ist die Schärfentiefe dz (2x rayleigh-range) mit dem Strahldurchmesser verknüpft. Es gilt d=√(λdz/π), wobei λ die Wellenlänge im Medium ist. Ein Bildfeld von dz=50 µm wird von einem Strahl beleuchtet, der also an der Taille d=2,4 µm dick (1 /e-Breite) ist. Der Abregungsbereich für eine Schichtdicke von z.B. 0,1 µm ist also 2,3 µm dick.

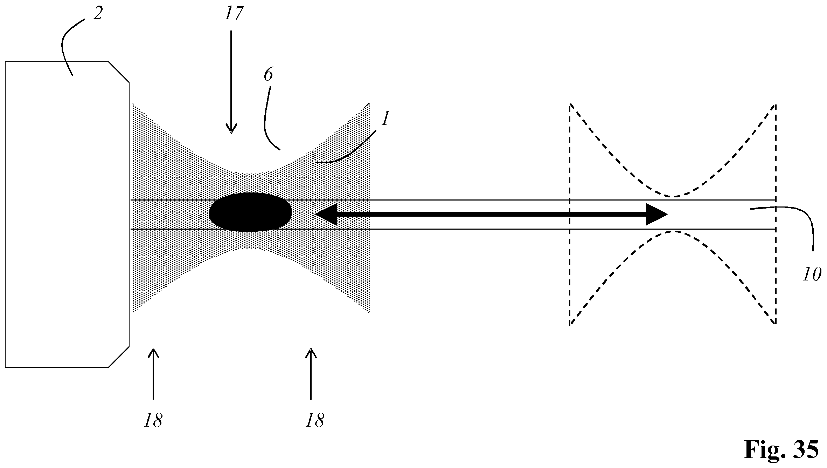

Daher ist die STED-Abregung abseits des Ortes des engsten Strahldurchmessers (z=0) auf Grund der beugungsbedingten Strahlaufweitung und der damit einher gehenden Reduktion der Lichtleistungsdichte äußerst schwierig zu realisieren. Es ist daher nicht möglich, mit einem langen Fokus 11 eine Probenuntersuchung allein auf der Basis STED-SPIM effektiv zu betreiben; selbst dann nicht, wenn der Fokus 11 axial verkürzt und axial verschoben wird. Erst die erfindungsgemäße Kombination mit einer Ausblendung des Fluoreszenzlichtes, das von außerhalb des ersten und zweiten Unterbereichs stammt, führt dazu, eine nennenswert höhere Auflösung bei gutem Bildkontrast erreichen zu können, was insbesondere Figur 35 illustriert.

Fig. 35 illustriert schematisch die Verbesserung der axialen Auflösung im Bereich der Strahltaille 17 (Ort des kleinsten Strahldurchmessers) durch die Überlagerung eines Abregungs- oder Schaltlichtbündels 6, das dort auf Grund der Fokussierung eine hohe Leistungsdichte aufweist, und zusätzlich die Verbesserung durch die Unterdrückung des unerwünschten Detektionslichtes in den Bereichen 18 vor und hinter der Strahltaille 17 (Ort des kleinsten Strahldurchmessers)durch die konfokale Liniendetektion, die bewirkt, dass ausschließlich Detektionslicht detektiert wird, das aus dem Detektionsbereich 10 entstammt. Der Fokus 11 wird während der Detektion einer Probenlinie in Richtung der Lichtausbreitungsrichtung vor und/oder zurück verschoben, um die Probenlinie kontinuierlich abzutasten, was durch den Doppelpfeil angedeutet ist. Nach dem Abtasten der Probenlinie kann die nächste, insbesondere parallel benachbarte, Probenlinie auf dieselbe Weise abgetastet werden und so fort.

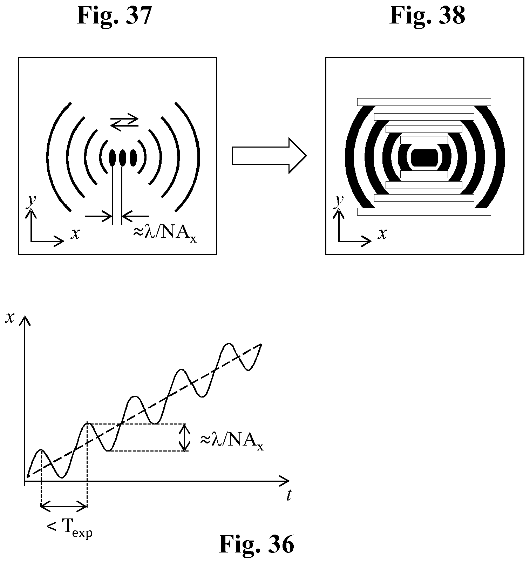

Figur 36 zeigt schematisch eine grafische Darstellung des zeitlichen Verlaufs des Ansteuersignals zum Verschieben des Überlappungsbereichs von Beleuchtungslichtbündel 1 und Abregungs- oder Schaltlichtbündel 6, in Richtung der x-Achse wobei die Position des Beleuchtungslichtbündels zusätzlich dem Verschieben moduliert wird. Die Position des Beleuchtungslichtbündels (1) wird zusätzlich dem Verschieben des Überlappungsbereichs mit einer Frequenz, die größer ist als das Dreifache von tₑₓₚ, wobei tₑₓₚ die Belichtungszeit des Detektors ist, und mit einer Amplitude, die im Probenvolumen λ/NAx entspricht, wobei λ die Wellenlänge des Beleuchtungslichts und NAx die numerische Apertur ist, unter der das in x-Richtung fokussiert wird, moduliert. Als Resultat ist der Position des Beleuchtungslichtbündels (1) zusätzlich eine Zitterbewegung um λ/NAx aufgeprägt (Figur 37), so dass die einzelnen Maxima des Beleuchtungslichtbündels (1) effektiv breiter sind, was Figur 38 zeigt.

### Bezugszeichenliste:

- 1: Beleuchtungslichtbündel
- 2: Beleuchtungsobjektiv
- 3: Pfeil
- 4: Detektionsobjektiv
- 5: Detektionsebene
- 6: Abregungs- oder Schaltlichtbündel
- 7: Detektionslicht
- 8: Tubuslinse
- 9: Spaltdetektor
- 10: Detektionsbereich
- 11: Fokus
- 12: Flächendetektor
- 13: Abbildung des beleuchteten Probenbereichs
- 14: Pfeil
- 15: Pfeil
- 16: Doppelpfeil
- 17: Strahltaille
- 18: Bereiche vor und hinter der Strahltaille
- 19: erster Unterbereich
- 20: Zweiter Unterbereich
- 21: Intensitätsschwellwert
- 22: Nullstelle

## Patentansprüche

1. Verfahren zum Untersuchen einer Probe, wobei
a. die Probe in einer Probenebene entlang einer Probenlinie mit einem Beleuchtungslichtbündel (1) beleuchtet wird, das sich entlang der Probenlinie ausbreitet und das wenigstens eine zur Fluoreszenzanregung der Probe geeignete Wellenlänge aufweist, und
b. die Probe mit einem Abregungs- oder Schaltlichtbündel (6) beaufschlagt wird, das in der Probenebene in einem Überlappungsbereich wenigstens teilweise räumlich mit dem Beleuchtungslichtbündel (1) überlappt und die wenigstens eine zur Abregung der Probe geeignete Wellenlänge aufweist,
**dadurch gekennzeichnet, dass**
c. mittels eines Spaltdetektors (9) von der Probenebene ausgehendes Fluoreszenzlicht als Detektionslicht detektiert wird, wobei der Spaltdetektor (9) so angeordnet ist, dass er Fluoreszenzlicht aus zwei Unterbereichen des Überlappungsbereichs detektieren kann, und zwar sowohl aus einem ersten Unterbereich (19), in dem die Wahrscheinlichkeit einer Wechselwirkung der Probenmoleküle mit dem Abregungs- oder Schaltlichtbündel (6) größer als 90%, insbesondere größer 95%, ganz insbesondere größer 99%, ist, als auch aus einem zweiten Unterbereich (20), der von dem ersten Unterbereich (19) wenigstens abschnittweise umgeben ist und in dem das Abregungs- oder Schaltlichtbündel (6) eine Nullstelle aufweist, während gleichzeitig das von außerhalb des ersten Unterbereichs (19) und des zweiten Unterbereichs (20) stammende Fluoreszenzlicht wenigstens teilweise ausgeblendet und nicht detektiert wird.

2. Verfahren nach Anspruch 1, **dadurch gekennzeichnet, dass** das Beleuchtungslichtbündel (1) ein Gaußstrahl oder ein Bessel-Strahl oder ein sectioned Besselstrahl oder ein Mathieustrahl ist.

3. Verfahren nach Anspruch 1 oder 2, **dadurch gekennzeichnet, dass**
a. das Abregungs- oder Schaltlichtbündel (6) dieselbe Ausbreitungsrichtung aufweist, wie das Beleuchtungslichtbündel (1) und/oder dass
b. das Abregungs- oder Schaltlichtbündel (6) eine zur Ausbreitungsrichtung des Beleuchtungslichtbündels (1) parallele Ausbreitungsrichtung aufweist, und/oder dass
c. das Abregungs- oder Schaltlichtbündel (6) ein zirkularsymmetrisches Querschnittsprofil oder im Querschnitt zwei Maxima aufweist, die symmetrisch um eine Nullstelle angeordnet sind, aufweist und/oder dass
d. das Abregungs- oder Schaltlichtbündel (6) aus wenigstens einem Laguerre-Gauß oder Laguerre-Bessel-Strahl gebildet ist.

4. Verfahren nach einem der Ansprüche 1 bis 3, **dadurch gekennzeichnet, dass** wenigstens ein Teil der Probenebene sukzessive abgetastet wird.

5. Verfahren nach einem der Ansprüche 1 bis 4, **dadurch gekennzeichnet, dass** die Spaltbreitenrichtung des Spaltdetektors (9) senkrecht zur Längserstreckungsrichtung der Abbildung der Probenlinie in die Detektionsebene ausgerichtet ist.

6. Verfahren nach einem der Ansprüche 1 bis 4, **dadurch gekennzeichnet, dass** die Spaltbreitenrichtung des Spaltdetektors (9) parallel zur Längserstreckungsrichtung der Abbildung der Probenlinie in die Detektionsebene ausgerichtet ist.

7. Verfahren nach Anspruch 6, **dadurch gekennzeichnet, dass** eine konfokale Liniendetektion von Detektionslicht (7) erfolgt, das von dem mittels des Beleuchtungslichtbündels (1) entlang der Probenlinie beleuchteten Probenbereich ausgeht.

8. Verfahren nach einem der Ansprüche 1 bis 7, **dadurch gekennzeichnet, dass** der Spaltdetektor (9) der jeweils aktiv geschaltete Teil eines in der Detektionsebene angeordneten Flächendetektors (12) ist.

9. Verfahren nach Anspruch 8, **dadurch gekennzeichnet, dass**
a. der Spaltdetektor (9) in der Detektionsebene durch sukzessives Aktiv-Schalten und Inaktiv-Schalten jeweils benachbarter Teile des Flächendetektors (12) bewegt wird, und/oder dass
b. der Spaltdetektor (9) in der Detektionsebene durch sukzessives Aktiv-Schalten und Inaktiv-Schalten jeweils benachbarter Teile des Flächendetektors (12) in Spaltbreitenrichtung bewegt wird.

10. Verfahren nach einem der Ansprüche 1 bis 7, **dadurch gekennzeichnet, dass** das Detektionslicht (7) mittels einer im Detektionsstrahlengang angeordneten und hinsichtlich des Ablenkwinkels einstellbaren Detektions-Strahlablenkeinrichtung, die synchron zu einem Verschieben des Beleuchtungslichtbündels (1) angesteuert wird, zu dem relativ zur Probe und/oder relativ zu einem Detektionsobjektiv (4) feststehenden Spaltdetektor (9) umgelenkt wird.

11. Vorrichtung, insbesondere zum Ausführen eines Verfahrens nach einem der Ansprüche 1 bis 10, die
a. zum Untersuchen einer Probe ausgebildet ist und die
b. wenigstens eine Lichtquelle zum Erzeugen eines Beleuchtungslichtbündels (1), das wenigstens eine zur Fluoreszenzanregung der Probe geeignete Wellenlänge aufweist, und zum Erzeugen eines Abregungs- oder Schaltlichtbündels (6), das wenigstens eine zur Abregung der Probe geeignete Wellenlänge aufweist, beinhaltet und die
c. wenigstens ein Beleuchtungsobjektiv (2) zum Fokussieren des Beleuchtungslichtbündels (1) und des Abregungs- oder Schaltlichtbündels (6) beinhaltet,
wobei das Beleuchtungslichtbündel (1) und das Abregungs- oder Schaltlichtbündel (6) derart geführt sind, dass eine zu untersuchende Probe in einer Probenebene entlang einer Probenlinie mit dem sich entlang der Probenlinie ausbreitenden Beleuchtungslichtbündel (1) beleuchtet ist und das Abregungs- oder Schaltlichtbündel (6) in der Probenebene wenigstens teilweise räumlich in einem Überlappungsbereich mit dem Beleuchtungslichtbündel (1) überlappt, und wobei eine Detektionsoptik vorhanden ist, die ein Detektionsobjektiv (4) beinhaltet und die von dem mittels des Beleuchtungslichtbündels (1) entlang der Probenlinie beleuchteten Probenbereich ausgehendes Detektionslicht (7) in eine Detektionsebene abbildet, in der ein Detektor angeordnet ist,
**dadurch gekennzeichnet, dass** der Detektor ein Spaltdetektor (9) ist, der von der Probenebene ausgehendes Fluoreszenzlicht als Detektionslicht detektiert,
wobei der Spaltdetektor (9) so angeordnet ist, dass er Fluoreszenzlicht aus zwei Unterbereichen des Überlappungsbereichs detektieren kann, und zwar sowohl aus einem ersten Unterbereich (19), in dem die Wahrscheinlichkeit einer Wechselwirkung der Probenmoleküle mit dem Abregungs- oder Schaltlichtbündel (6) größer als 90%, insbesondere größer 95%, ganz insbesondere größer 99%, ist, als auch aus einem zweiten Unterbereich (20), der von dem ersten Unterbereich (19) wenigstens abschnittweise umgeben ist und in dem das Abregungs- oder Schaltlichtbündel (6) eine Nullstelle aufweist, während der Detektor gleichzeitig das von außerhalb des ersten Unterbereichs (19) und des zweiten Unterbereichs (20) stammende Fluoreszenzlicht wenigstens teilweise ausblendet und nicht detektiert.

12. Vorrichtung nach Anspruch 11, **dadurch gekennzeichnet, dass**
a. das Beleuchtungslichtbündel (1) ein Gaußstrahl oder ein Bessel-Strahl oder ein sectioned Besselstrahl oder ein Mathieustrahl ist, oder dass
b. die Lichtquelle ein Lichtbeeinflussungsmittel, insbesondere ein SLM (spatial light modulator) oder eine Kombination aus einem Axikon und einer Spaltblende, aufweist, das aus einem Primärbeleuchtungslichtbündel einen Bessel-Strahl oder einen sectioned Besselstrahl oder ein Mathieustrahl erzeugt.

13. Vorrichtung nach Anspruch 11 oder 12, **dadurch gekennzeichnet, dass**
a. die Abregungs- oder Schaltlichtverteilung dieselbe Ausbreitungsrichtung aufweist, wie das Beleuchtungslichtbündel (1) und/oder dass
b. die Abregungs- oder Schaltlichtverteilung ein zirkularsymmetrisches Querschnittsprofil aufweist oder im Querschnitt zwei Maxima, die symmetrisch um eine Nullstelle angeordnet sind, aufweist und/oder dass
c. die Abregungs- oder Schaltlichtverteilung aus wenigstens einem Laguerre-Gauß- oder Laguerre-Bessel-Strahl gebildet ist.

14. Vorrichtung nach einem der Ansprüche 11 bis 13, **dadurch gekennzeichnet, dass** wenigstens eine hinsichtlich des Ablenkwinkels einstellbare Beleuchtungs-Strahlablenkeinrichtung im Strahlengang des Beleuchtungslichtbündels (1) angeordnet ist, mittels der das Beleuchtungslichtbündel (1) in der Probenebene relativ zur Probe verschiebbar ist.

15. Vorrichtung nach Anspruch 14, **dadurch gekennzeichnet, dass** die Beleuchtungs-Strahlablenkeinrichtung auch das Abregungs- oder Schaltlichtbündel (6) ablenkt oder dass eine weitere hinsichtlich des Ablenkwinkels einstellbare Beleuchtungs-Strahlablenkeinrichtung vorhanden ist, die das Abregungs- oder Schaltlichtbündel (6) synchron zur Bewegung des Beleuchtungslichtbündels (1) ablenkt.

16. Vorrichtung nach einem der Ansprüche 11 bis 15, **dadurch gekennzeichnet, dass** die Spaltbreitenrichtung des Spaltdetektors (9) senkrecht zur Längserstreckungsrichtung der Abbildung der Probenlinie in die Detektionsebene ausgerichtet ist.

17. Vorrichtung nach einem der Ansprüche 11 bis 15, **dadurch gekennzeichnet, dass** die Spaltbreitenrichtung des Spaltdetektors (9) parallel zur Längserstreckungsrichtung der Abbildung der Probenlinie in die Detektionsebene ausgerichtet ist.

18. Vorrichtung nach einem der Ansprüche 11 bis 17, **dadurch gekennzeichnet, dass** der Spaltdetektor (9) einen in der Detektionsebene angeordneten Flächendetektor (12) aufweist, dem eine Spaltblende (14) vorgeschaltet ist, und dass der Flächendetektor (12) bezüglich seiner gesamten Sensorflächge aktiv geschaltet ist,

19. Vorrichtung nach Anspruch 18, **dadurch gekennzeichnet, dass** eine hinsichtlich des Ablenkwinkels einstellbare Detektions-Strahlablenkeinrichtung, die synchron zu einem Verschieben des Beleuchtungslichtbündels (1) angesteuert ist, das Detektionslicht zu dem relativ zur Probe feststehenden Spaltdetektor (9) umlenkt.

20. Vorrichtung nach einem der Ansprüche 11 bis 19, **dadurch gekennzeichnet, dass** die Vorrichtung ein Rastermikroskop oder ein konfokales Rastermikroskop aufweist.

## Claims

1. A method for examining a sample, wherein
a. the sample is illuminated in a sample plane along a sample line with an illumination light beam (1) which propagates along the sample line and which has at least one wavelength suitable for fluorescence excitation of the sample, and
b. the sample is exposed to a depletion or switching light beam (6) which at least partially overlaps spatially with the illumination light beam (1) in an overlap region in the sample plane and which has at least one wavelength suitable for depletion of the sample, **characterized in that**
c. fluorescence light emanating from the sample plane is detected as detection light by means of a slit detector (9), the slit detector (9) being arranged such that it can detect fluorescent light from two subregions of the overlap region, namely both from a first subregion (19) in which the probability of interaction of the sample molecules with the depletion or switching light beam (6) is greater than 90%, in particular greater than 95%, in particular greater than 99%, and also from a second subregion (20) which is at least partially surrounded by the first subregion (19) and in which the depletion or switching light beam (6) has a zero point, while at the same time the fluorescent light originating from outside the first subregion (19) and the second subregion (20) is at least partially blocked out and not detected.

2. The method according to claim 1, **characterized in that** the illumination light beam (1) is a Gaussian beam or a Bessel beam or a sectioned Bessel beam or a Mathieu beam.

3. The method according to claim 1 or 2, **characterized in that**
a. the depletion or switching light beam (6) has the same direction of propagation as the illumination light beam (1) and/or that
b. the depletion or switching light beam (6) has a propagation direction parallel to the propagation direction of the illumination light beam (1), and/or that
c. the depletion or switching light beam (6) has a circularly symmetrical cross-sectional profile or has two maxima in the cross-section which are arranged symmetrically about a zero point, and/or that
d. the depletion or switching light beam (6) is formed from at least one Laguerre-Gaussian or Laguerre-Bessel beam.

4. The method according to one of claims 1 to 3, **characterized in that**
at least part of the sample plane is scanned successively.

5. The method according to one of claims 1 to 4, **characterized in that** the slit width direction of the slit detector (9) is aligned perpendicular to the longitudinal extension direction of the image of the sample line in the detection plane.

6. The method according to one of claims 1 to 4, **characterized in that** the slit width direction of the slit detector (9) is aligned parallel to the longitudinal extension direction of the image of the sample line in the detection plane.

7. The method according to claim 6, **characterized in that** confocal line detection of detection light (7) is carried out, which emanates from the sample region illuminated along the sample line by means of the illumination light beam (1).

8. The method according to one of claims 1 to 7, **characterized in that** the slit detector (9) is the respective actively switched part of an area detector (12) arranged in the detection plane.

9. The method according to claim 8, **characterized in that**
a. the slit detector (9) is moved in the detection plane by successive active switching and inactive switching of respectively adjacent parts of the area detector (12), and/or that
b. the slit detector (9) is moved in the detection plane in the direction of the slit width by successive active switching and inactive switching of respectively adjacent parts of the area detector (12).

10. The method according to one of claims 1 to 7, **characterized in that** the detection light (7) is deflected to the slit detector (9), which is fixed relative to the sample and/or relative to a detection objective (4), by means of a detection beam deflection device which is arranged in the detection beam path, is adjustable with respect to the deflection angle and is controlled synchronously with a displacement of the illumination light beam (1).

11. A device, in particular for carrying out a method according to one of claims 1 to 10, which
a. is designed to examine a sample and which
b. comprises at least one light source for generating an illumination light beam (1) having at least one wavelength suitable for fluorescence excitation of the sample and for generating a depletion or switching light beam (6) having at least one wavelength suitable for depletion of the sample, and which
c. comprises at least one illumination lens (2) for focusing the illumination light beam (1) and the depletion or switching light beam (6),
wherein the illumination light beam (1) and the depletion or switching light beam (6) are guided in such a way that a sample to be examined is illuminated in a sample plane along a sample line with the illumination light beam (1) propagating along the sample line and the depletion or switching light beam (6) at least partially overlaps spatially in an overlap region with the illumination light beam (1) in the sample plane, and wherein a detection optical system is present which includes a detection objective (4) and which images the detection light (7) emanating from the sample region illuminated along the sample line by means of the illumination light beam (1) into a detection plane in which a detector is arranged,
**characterized in that** the detector is a slit detector (9) which detects fluorescent light emanating from the sample plane as detection light,
wherein the slit detector (9) is arranged such that it can detect fluorescence light from two subregions of the overlap region, namely both from a first subregion (19) in which the probability of interaction of the sample molecules with the depletion or switching light beam (6) is greater than 90%, in particular greater than 95%, in particular greater than 99%, and also from a second subregion (20) which is at least partially surrounded by the first subregion (19) and in which the depletion or switching light beam (6) has a zero point, while at the same time the detector at least partially blocks out and does not detect the fluorescent light originating from outside the first subregion (19) and the second subregion (20) .

12. The device according to claim 11, **characterized in that**
a. the illumination light beam (1) is a Gaussian beam or a Bessel beam or a sectioned Bessel beam or a Mathieu beam, or that
b. the light source has a light influencing means, in particular an SLM (spatial light modulator) or a combination of an axicon and a slit diaphragm, which generates a Bessel beam or a sectioned Bessel beam or a Mathieu beam from a primary illumination light beam.

13. The device according to claim 11 or 12, **characterized in that**
a. the depletion or switching light distribution has the same direction of propagation as the illumination light beam (1) and/or that
b. the depletion or switching light distribution has a circularly symmetrical cross-sectional profile or has two maxima in the cross-section that are arranged symmetrically around a zero point and/or that
c. the depletion or switching light distribution is formed from at least one Laguerre-Gaussian or Laguerre-Bessel beam.

14. The device according to one of claims 11 to 13, **characterized in that** at least one illumination beam deflection device, which is adjustable with respect to the deflection angle, is arranged in the beam path of the illumination light beam (1), by means of which the illumination light beam (1) can be displaced in the sample plane relative to the sample.

15. The device according to claim 14, **characterized in that** the illumination beam deflection device also deflects the depletion or switching light beam (6) or **in that** a further illumination beam deflection device is provided which is adjustable with respect to the deflection angle and which deflects the depletion or switching light beam (6) synchronously with the movement of the illumination light beam (1).

16. The device according to one of claims 11 to 15, **characterized in that** the slit width direction of the slit detector (9) is aligned perpendicular to the longitudinal extension direction of the image of the sample line in the detection plane.

17. The device according to one of claims 11 to 15, **characterized in that** the slit width direction of the slit detector (9) is aligned parallel to the longitudinal extension direction of the image of the sample line in the detection plane.

18. The device according to one of claims 11 to 17, **characterized in that** the slit detector (9) has an area detector (12) which is arranged in the detection plane and is preceded by a slit diaphragm (14), and **in that** the area detector (12) is switched to be active with respect to its entire sensor area.

19. The device according to claim 18, **characterized in that** a detection beam deflection device, which is adjustable with respect to the deflection angle and is controlled synchronously with a displacement of the illumination light beam (1), deflects the detection light to the slit detector (9), which is fixed relative to the sample.

20. The device according to any one of claims 11 to 19, **characterized in that** the device comprises a scanning microscope or a confocal scanning microscope.

## Revendications

1. Procédé permettant d'analyser un échantillon, dans lequel
a) l'échantillon est éclairé dans un plan d'échantillon le long d'une ligne d'échantillonnage avec un faisceau de lumière d'éclairage (1) qui se propage le long de la ligne d'échantillonnage et qui présente au moins une longueur d'onde appropriée pour l'excitation de fluorescence de l'échantillon, et
b) l'échantillon est sollicité par un faisceau de lumière de désexcitation ou de commutation (6) qui se chevauche dans le plan d'échantillon dans une région de chevauchement au moins en partie spatialement avec le faisceau de lumière d'éclairage (1) et présente ladite au moins une longueur d'onde appropriée pour la désexcitation de l'échantillon,
**caractérisé en ce que**
c) un détecteur de fente (9) détecte en tant que lumière de détection de la lumière fluorescente émanant du plan d'échantillon, le détecteur de fente (9) étant disposé de telle sorte qu'il peut détecter de la lumière fluorescente provenant de deux régions secondaires de la région de chevauchement, notamment à la fois provenant d'une première région secondaire (19) dans laquelle la probabilité d'une interaction des molécules d'échantillon avec le faisceau de lumière de désexcitation ou de commutation (6) est supérieure à 90 %, en particulier supérieure à 95 %, tout particulièrement supérieure à 99 %, et provenant d'une deuxième région secondaire (20) qui est entourée par la première région secondaire (19) au moins par endroits et dans laquelle le faisceau de lumière de désexcitation ou de commutation (6) présente un point zéro, alors qu'en même temps la lumière fluorescente provenant de l'extérieur de la première région secondaire (19) et de la deuxième région secondaire (20) est au moins partiellement supprimée et n'est pas détectée.

2. Procédé selon la revendication 1, **caractérisé en ce que** le faisceau de lumière d'éclairage (1) est un faisceau gaussien ou un faisceau de Bessel ou un faisceau de Bessel segmenté ou un faisceau de Mathieu.

3. Procédé selon la revendication 1 ou 2, **caractérisé en ce que**
a) le faisceau de lumière de désexcitation ou de commutation (6) présente la même direction de propagation que le faisceau de lumière d'éclairage (1), et/ou **en ce que**
b) le faisceau de lumière de désexcitation ou de commutation (6) présente une direction de propagation parallèle à la direction de propagation du faisceau de lumière d'éclairage (1), et/ou **en ce que**
c) le faisceau de lumière de désexcitation ou de commutation (6) présente un profil de section transversale à symétrie circulaire ou présente en section transversale deux valeurs maximales qui sont disposées symétriquement autour d'un point zéro, et/ou **en ce que**
d) le faisceau de lumière de désexcitation ou de commutation (6) est formé au moins à partir d'au moins un faisceau de Laguerre-Gauss ou de Laguerre-Bessel.

4. Procédé selon l'une quelconque des revendications 1 à 3, **caractérisé en ce qu'**au moins une partie du plan d'échantillon est balayée successivement.

5. Procédé selon l'une quelconque des revendications 1 à 4, **caractérisé en ce que** la direction de largeur de fente du détecteur de fente (9) est alignée perpendiculairement à la direction d'étendue longitudinale de la représentation de la ligne d'échantillonnage dans le plan de détection.

6. Procédé selon l'une quelconque des revendications 1 à 4, **caractérisé en ce que** la direction de largeur de fente du détecteur de fente (9) est alignée en parallèle à la direction d'étendue longitudinale de la représentation de la ligne d'échantillonnage dans le plan de détection.

7. Procédé selon la revendication 6, **caractérisé en ce qu'**une détection de ligne confocale de lumière de détection (7) est effectuée qui émane de la région d'échantillon éclairée au moyen du faisceau de lumière d'éclairage (1) le long de la ligne d'échantillonnage.

8. Procédé selon l'une quelconque des revendications 1 à 7, **caractérisé en ce que** le détecteur de fente (9) est la partie respectivement commutée active d'un détecteur à jonction (12) disposé dans le plan de détection.

9. Procédé selon la revendication 8, **caractérisé en ce que**
a) le détecteur de fente (9) est déplacé dans le plan de détection par commutation active et commutation inactive successives respectivement de parties voisines du détecteur à jonction (12), et/ou **en ce que**
b) le détecteur de fente (9) est déplacé dans le plan de détection par commutation active et commutation inactive successives de parties respectivement voisines du détecteur à jonction (12) dans la direction de largeur de fente.

10. Procédé selon l'une quelconque des revendications 1 à 7, **caractérisé en ce que** la lumière de détection (7) est déviée au moyen d'un équipement de déviation de faisceau de détection disposé sur la trajectoire de faisceau de détection et réglable concernant l'angle de déviation, qui est piloté de manière synchrone avec un décalage du faisceau de lumière d'éclairage (1), vers le détecteur de fente (9) fixe par rapport à l'échantillon et/ou par rapport à un objectif de détection (4).

11. Dispositif, permettant en particulier d'exécuter un procédé selon l'une quelconque des revendications 1 à 10 qui
a) est réalisé pour analyser un échantillon, et qui
b) comprend au moins une source de lumière pour générer un faisceau de lumière d'éclairage (1) qui présente au moins une longueur d'onde appropriée pour l'excitation de fluorescence de l'échantillon et pour générer un faisceau de lumière de désexcitation ou de commutation (6) qui présente au moins une longueur d'onde appropriée pour la désexcitation de l'échantillon, et qui
c) comprend au moins un objectif d'éclairage (2) pour focaliser le faisceau de lumière d'éclairage (1) et le faisceau de lumière de désexcitation ou de commutation (6),
dans lequel le faisceau de lumière d'éclairage (1) et le faisceau de lumière de désexcitation ou de commutation (6) sont guidés de telle sorte qu'un échantillon à analyser dans un plan d'échantillon le long d'une ligne d'échantillonnage est éclairé par le faisceau de lumière d'éclairage (1) se propageant le long de la ligne d'échantillonnage, et le faisceau de lumière de désexcitation ou de commutation (6) se chevauche dans le plan d'échantillon au moins en partie spatialement dans une région de chevauchement avec le faisceau de lumière d'éclairage (1), et dans lequel une optique de détection est présente qui comprend un objectif de détection (4) et qui représente de la lumière de détection (7) émanant de la région d'échantillon éclairée au moyen du faisceau de lumière d'éclairage (1) le long de la ligne d'échantillonnage dans un plan de détection dans lequel est disposé un détecteur,
**caractérisé en ce que** le détecteur est un détecteur de fente (9) qui détecte en tant que lumière de détection de la lumière fluorescente émanant du plan d'échantillon,
dans lequel le détecteur de fente (9) est disposé de façon à pouvoir détecter de la lumière fluorescente provenant de deux régions secondaires de la région de chevauchement, notamment à la fois provenant d'une première région secondaire (19) dans laquelle la probabilité d'une interaction des molécules d'échantillon avec le faisceau de désexcitation ou de commutation (6) est supérieure à 90 %, en particulier supérieure à 95 %, tout particulièrement supérieure à 99 %, et provenant d'une deuxième région secondaire (20) qui est entourée par la première région secondaire (19) au moins par endroits et dans laquelle le faisceau de désexcitation ou de commutation (6) présente un point zéro, alors qu'en même temps le détecteur supprime au moins partiellement et ne détecte pas la lumière fluorescente provenant de l'extérieur de la première région secondaire (19) et de la deuxième région secondaire (20).

12. Dispositif selon la revendication 11, **caractérisé en ce que**
a) le faisceau de lumière d'éclairage (1) est un faisceau gaussien ou un faisceau de Bessel ou un faisceau de Bessel segmenté ou un faisceau de Mathieu, ou **en ce que**
b) la source de lumière présente un moyen affectant la lumière, en particulier un SLM (modulateur spatial de lumière) ou une combinaison d'un axicon et d'un diaphragme à fente qui génère à partir d'un faisceau de lumière d'éclairage primaire un faisceau de Bessel ou un faisceau de Bessel segmenté ou un faisceau de Mathieu.

13. Dispositif selon la revendication 11 ou 12, **caractérisé en ce que**
a) la distribution de lumière de désexcitation ou de commutation présente la même direction de propagation que le faisceau de lumière d'éclairage (1), et/ou **en ce que**
b) la distribution de lumière de désexcitation ou de commutation présente un profil de section transversale à symétrie circulaire ou présente en section transversale deux valeurs maximales qui sont disposées symétriquement autour d'un point zéro, et/ou **en ce que**
c) la distribution de lumière de désexcitation ou de commutation est formée à partir d'au moins un faisceau de Laguerre-Gauss ou de Laguerre-Bessel.

14. Dispositif selon l'une quelconque des revendications 11 à 13, **caractérisé en ce qu'**au moins un équipement de déviation de faisceau d'éclairage réglable concernant l'angle de déviation est disposé dans sur la trajectoire du faisceau de lumière d'éclairage (1) au moyen duquel le faisceau de lumière d'éclairage (1) peut être décalé dans le plan d'échantillon par rapport à l'échantillon.

15. Dispositif selon la revendication 14, **caractérisé en ce que** l'équipement de déviation de faisceau d'éclairage dévie aussi le faisceau de lumière de désexcitation ou de commutation (6) ou **en ce qu'**un équipement de déviation de faisceau d'éclairage supplémentaire, réglable concernant l'angle de déviation, est présent qui dévie le faisceau de lumière de désexcitation ou de commutation (6) de manière synchrone avec le mouvement du faisceau de lumière d'éclairage (1).

16. Dispositif selon l'une quelconque des revendications 11 à 15, **caractérisé en ce que** la direction de largeur de fente du détecteur de fente (9) est alignée perpendiculairement à la direction d'étendue longitudinale de la représentation de la ligne d'échantillonnage dans le plan de détection.

17. Dispositif selon l'une quelconque des revendications 11 à 15, **caractérisé en ce que** la direction de largeur de fente du détecteur de fente (9) est alignée en parallèle à la direction d'étendue longitudinale de la représentation de la ligne d'échantillonnage dans le plan de détection.

18. Dispositif selon l'une quelconque des revendications 11 à 17, **caractérisé en ce que** le détecteur de fente (9) présente un détecteur à jonction (12) disposé dans le plan de détection en amont duquel est disposé un diaphragme à fente (14), et **en ce que** le détecteur à jonction (12) est commuté actif pour toute sa surface de capteur.

19. Dispositif selon la revendication 18, **caractérisé en ce qu'**un équipement de déviation de faisceau de détection, réglable concernant l'angle de déviation et qui est piloté de manière synchrone avec un décalage du faisceau de lumière d'éclairage (1), dévie la lumière de détection vers un détecteur de fente (9) fixe par rapport à l'échantillon.

20. Dispositif selon l'une quelconque des revendications 11 à 19, **caractérisé en ce que** le dispositif présente un microscope à balayage ou un microscope à balayage confocal.
